Europäisches Patentamt

European Patent Office

Office européen des brevets

(19)

(11) EP 0 884 605 A1

(12) DEMANDE DE BREVET EUROPEEN

(43) Date de publication:
16.12.1998 Bulletin 1998/51

(51) Int Cl.⁶: G01S 13/90

(21) Numéro de dépôt: 98401135.3

(22) Date de dépôt: 12.05.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 13.05.1997 FR 9705816

(71) Demandeur: THOMSON-CSF
75008 Paris (FR)

(72) Inventeur: Normant, Eric,
c/o Thomson-CSF P. I. P. C. TPI/PC
94117 Arcueil cedex (FR)

(74) Mandataire: Beylot, Jacques et al
Thomson-CSF Propriété Intellectuelle,
13, Avenue du Président Salvador Allende
94117 Arcueil Cédex (FR)

(54) **Procédé de traitement du signal de réception d'un radar SAR de type DERAMP**

(57) L'invention concerne l'utilisation d'un radar de type Deramp en radar à synthèse d'ouverture pour de l'imagerie radar. Un radar de type Deramp émet des impulsions modulées linéairement en fréquence répétées de manière cohérente et réalise une sorte de compression d'impulsion en réception par démodulation des signaux d'écho reçus au moyen d'une rampe de fréquence reproduisant tout ou partie d'une impulsion émise et par une transformée de Fourier en distance. L'application à un signal de radar de type Deramp d'un traitement SAR classique est perturbée par le fait que dans ce signal, la partie effectivement démodulée d'un signal d'écho dû à une cible a une position par rapport à ce signal d'écho et une durée qui sont variables en fonction de la distance de la cible au radar. Le procédé proposé permet d'éliminer cette perturbation grâce à un choix particulier d'un support temporel commun utilisé pour la démodulation des signaux d'écho de toutes les cibles de la fauchée utile et à une correction de phase appliquée au niveau de la réponse impulsionnelle du filtre de focalisation image du traitement SAR. Accessoirement, une deuxième correction de phase peut être appliquée au niveau des coefficients complexes de réflexion obtenus pour les points de l'image en fin de traitement SAR.

FIG.8

## Description

Les radars à synthèse d'ouverture, connus sous le sigle SAR, initiales des termes anglo-saxons Synthetic Aperture Radar permettent d'obtenir des images du sol de grande résolution, par tous les temps depuis un porteur en déplacement. Ils mettent en oeuvre un éclairement du sol, dans une direction latérale par rapport à la route du porteur, par une forme d'onde électromagnétique récurrente répétée de manière cohérente, la réception de la somme des échos retournés par le sol et l'analyse de cette somme d'échos reçue tout au long de la route du porteur pour en déduire les coefficients de réflexion des différents points de la zone examinée afin de composer une image radar. La cohérence de phase d'une récurrence à l'autre permet d'analyser l'histoire Doppler des différentes cibles et ainsi de les séparer en azimut, c'est-à-dire selon la direction du déplacement du porteur repérée par un axe dit azimut. La résolution suivant la direction perpendiculaire à celle du déplacement du porteur repérée par un axe dit distance se fait en fonction du temps de retour d'écho. Elle est améliorée, de manière classique, par la technique de compression d'impulsions.

Les données délivrées en réception par un radar SAR sont constituées par un échantillonnage du signal vidéo brute reçu à une double cadence : une cadence rapide correspondant à la succession des portes distance découpant le temps d'écoute du radar après chaque émission d'une forme d'onde et une cadence lente correspondant à la succession des récurrences de la forme d'onde émise. Il en résulte que l'on dispose, pour le traitement d'image d'un tableau de données à deux dimensions : une dimension distance le long de laquelle sont alignés les échantillons du signal de vidéo brute reçus en réponse à l'émission d'une forme d'onde, ces échantillons étant pris à la cadence rapide d'échantillonnage, et une dimension azimut le long de laquelle sont arrangées les suites successives d'échantillons du signal de vidéo brute reçu pour les diverses récurrences de la forme d'onde émise.

Le traitement d'image consiste à extraire une image d'un tel tableau à deux dimensions rassemblant les échantillons de vidéo brute reçus par le radar au cours de l'illumination d'une zone. Cette extraction se fait en séparant les contributions, à l'écho global, de chaque point de la zone en tenant compte des évolutions spécifiques des coordonnées distance et azimut du point considéré au cours de son illumination par le radar en déplacement au-dessus de la zone. L'évolution de la coordonnée distance consiste en un rapprochement du point jusqu'à ce que le radar passe à sa perpendiculaire puis en un éloignement. Le phénomène est connu sous la dénomination de migration en distance. L'évolution de la coordonnée azimut consiste en un rapprochement à vitesse décroissante impliquant un effet Doppler à fréquence positive en décroissance suivi d'un éloignement à vitesse croissante impliquant un effet Doppler à fréquence négative en augmentation avec annulation de l'effet Doppler au passage du radar par la perpendiculaire du point. Ce phénomène est connu sous la dénomination historique Doppler

Si l'on fait abstraction de la compression d'impulsion, le traitement d'image consiste, pour chaque point d'une zone illuminée par un radar SAR, à sélectionner le domaine en azimut du tableau des échantillons de vidéo brute correspondant à la période d'éclairement du point considéré par le radar, puis, dans ce domaine en azimut, à repérer la bande d'échantillons auquel le point considéré a contribué par son écho, en tenant compte pour ce faire de la migration distance, et enfin à filtrer la collection d'échantillons de cette bande pour tenir compte de l'historique Doppler du point considéré et en extraire son coefficient complexe de réflexion. Ces opérations qui sont nécessaires pour chaque point d'une zone imagée, sont faites de manière à limiter le plus possible la quantité de calcul.

Une analyse théorique de la nature des opérations à mener sur le tableau à deux dimensions distance et azimut, des échantillons de vidéo brute de réception délivrés par un radar SAR, y compris une éventuelle opération préalable de compression d'impulsion, pour obtenir une image montre que ces opérations peuvent être interprétées comme un filtrage bidimensionnel, dans les dimensions distance et azimut, du tableau, au moyen d'un filtre dit de focalisation d'image, dont la réponse impulsionnelle $h(\tau, t, \tau_i)$ à deux variables temporelles $\tau$ distance et t azimut, n'est pas stationnaire en distance, ce qui justifie la présence d'un deuxième paramètre distance $\tau_i$ dans son expression. Il en découle une façon classique de procéder au traitement du tableau des échantillons de vidéo brute de réception délivrés par un radar SAR qui consiste :

- à déterminer la réponse impulsionnelle $h(\tau, t, \tau_i)$ à deux variables temporelles $\tau$ distance et t azimut, valable localement dans des bandes distance $\tau_i$ où elle est supposée restée stationnaire, définissant le filtre bidimensionnel de focalisation d'image réalisant à la fois la compression d'impulsion, la correction de la migration distance et l'extraction des composantes de fréquence correspondant à l'historique Doppler, cette détermination se faisant à partir des propriétés de la forme d'onde émise et des paramètres géométriques de la prise de vue,
- à convoluer cette réponse impulsionnelle de filtrage de focalisation d'image au tableau des échantillons du signal vidéo brute de réception préalablement découpé en bandes distance, en passant par des transformations de Fourier directe et inverse bidimensionnelles pour se retrouver dans les espaces des fréquences distance et azimut et éviter des calculs d'intégration inhérents à une convolution, et
- à réunir les bandes d'image obtenues pour reconstituer une image complète.

On montre que l'on peut réaliser une certaine économie de calcul en effectuant les opérations de compression d'impulsion préalablement à celles du traitement d'image.

La compression d'impulsion qui permet d'améliorer la résolution distance, peut se réaliser sur de nombreuses formes d'ondes émises et notamment sur une forme d'onde constituée d'une impulsion modulée linéairement en fréquence répétée de manière cohérente. La compression d'impulsion consiste en théorie à filtrer le signal reçu avec un filtre adapté à la forme d'onde émise ou encore à effectuer une corrélation du signal reçu avec la forme d'onde émise. C'est une opération difficile à réaliser, souvent coûteuse en calcul. C'est pourquoi on cherche souvent à lui substituer des traitements plus simples donnant des résultats analogues. Un exemple en est donné par un type de radar connu sous la dénomination anglo-saxonne de "Deramp "qui émet des impulsions hyperfréquence modulées linéairement en fréquence répétées de manière cohérente et qui réalise une sorte de compression d'impulsion en réception, non pas par un filtrage adapté, mais par une démodulation du signal reçu par les impulsions émises et une analyse fréquentielle du signal reçu démodulé. Pour des détails sur le radar Deramp on peut se reporter au livre :

[1]J.P. HARDANGE, P. LACOMME et J.C. MARCHAIS, "Radars aéroportés et spatiaux.", Masson 1995, pp. 168-170.

Dans un radar Deramp on tire avantage du fait qu'avec une impulsion modulée linéairement en fréquence, il y a une relation de proportionnalité entre le temps écoulé et la fréquence instantanée de l'impulsion. Grâce à celle-ci, le mélange de deux impulsions décalées dans le temps comme une impulsion émise et l'impulsion en écho qui en est retourné par une cible ponctuelle, donne un signal dont la fréquence est constante par rapport au temps et dépend du retard relatif entre les deux impulsions. Ainsi, la corrélation entre les formes d'onde émise et reçue d'où résulte la compression d'impulsion peut être remplacée par une simple démodulation du signal reçu par le signal émis suivie d'une transformée de Fourier avec des différences mineures dans le résultat.

L'avantage opérationnel du traitement effectué dans un radar Deramp en vue d'une compression d'impulsion est qu'il permet une très haute résolution en distance avec un récepteur de bande instantanée faible. Dans le cas d'une utilisation en imagerie, cela se fait au détriment de la largeur de la fauchée traitée, c'est à dire de la durée utile de réception entre chaque forme d'onde émise car la bande instantanée utile dans le récepteur est proportionnelle à la durée de la fauchée traitée. Ce mode de compression d'impulsion est donc particulièrement adapté aux systèmes d'imagerie radar très haute résolution sur des zones peu étendues en distance.

L'utilisation d'un radar de type Deramp en radar à ouverture synthétique pour faire de l'imagerie radar soulève des difficultés en raison des propriétés particulières de son signal de réception démodulé. Celui-ci a en effet la propriété de présenter, par rapport au signal d'écho de cible qui en est à l'origine, un retard variable en fonction de la position en distance de la cible dans la fauchée c'est-à-dire dans la zone illuminée par l'impulsion émise, et également d'avoir une durée variable, inférieure à celle du signal d'écho de cible qui en est à l'origine, dépendant également de la position en distance de la cible dans la fauchée. Son retard variable par rapport au signal d'écho qui en est à l'origine engendre une phase parasite qui vient perturber le traitement ultérieur de construction d'image et dégrade la netteté de l'image tandis que sa durée variable donne au radar de type Deramp une résolution variable en distance qui joue aussi sur la netteté de l'image.

La présente invention a pour but de résoudre ces difficultés afin d'obtenir une image radar la plus nette possible.

Elle a pour objet un procédé de traitement du signal de réception d'un radar SAR de type Deramp pour obtenir une image radar. Le radar SAR de type Deramp est embarqué à bord d'un porteur en déplacement au dessus d'une zone de terrain à imager qu'il illumine. Il émet des impulsions modulées linéairement en fréquence de durée T et de pente de modulation $\alpha$, répétées de manière cohérente, démodule le signal d'écho reçu en retour entre chaque impulsion émise par une rampe de démodulation qui est centrée en distance sur le milieu de la zone utile illuminée ou fauchée utile, qui reprend la forme de tout ou partie de l'impulsion émise et qui a une durée $T_d$ inférieure ou égale à la durée T d'une impulsion émise, suffisante pour déborder de l'intervalle de temps de réception où se chevauchent les signaux d'écho de l'ensemble des cibles de la fauchée utile, et délivre, après démodulation, un signal vidéo brute de réception disponible sous la forme d'échantillons successifs ou données de réception qui sont pris à une double cadence : une cadence rapide correspondant à la succession des portes distance et définissant une dimension temporelle distance $\tau$ selon un axe distance orienté latéralement par rapport à la trajectoire du porteur du radar SAR, et une cadence lente correspondant à la succession des récurrences et définissant une dimension temporelle azimut t selon un axe azimut orienté dans la direction de déplacement du porteur du radar SAR, et qui se présentent sous la forme d'un tableau de données de réception à deux dimensions distance et azimut. Ce procédé, comporte les étapes successives de traitement suivantes :

- passage des données du tableau de données de réception dans une ligne dispersive à réponse impulsionnelle $h_l$ (t) telle que sa fréquence instantanée est une fonction linéaire du temps :

$$h_l(t) = \exp\left(i 2\pi \frac{1}{2} K t^2\right)$$

avec une pente de modulation linéaire de fréquence K choisie égale à :

$$K = \alpha \; \frac{T_d + T - 2T_a}{T_d - T_a}$$

$T_a$ étant la durée utile de démodulation ou durée d'un support temporel commun choisi pour la démodulation des signaux d'écho en provenance de toutes les cibles de la fauchée utile, cette durée utile $T_a$ étant inférieure ou égale à la durée $T_d$ de la rampe de démodulation et supérieure ou égale à la période de temps commençant avant le début de réception d'un écho renvoyé par une cible placée en distance à l'extrémité éloignée de la fauchée utile et se terminant après la fin de réception d'un écho renvoyé par une cible placée en distance à l'extrémité proche de la fauchée utile tout en étant centrée en distance sur le milieu de la fauchée utile,

- sélection parmi les données du tableau bidimensionnel de données de réception consistant à retirer les données de réception se présentant selon l'axe distance en dehors de la durée utile choisie $T_a$ et à les remplacer par des valeurs nulles,
- remplacement des données du tableau de données de réception considérées selon la dimension distance, par leur transformée de Fourier monodimensionnelle en distance pour obtenir, après la démodulation et passage par la ligne dispersive, un genre de compression d'impulsion affectée d'un terme de phase parasite de compression d'impulsion,
- réarrangement des données du tableau selon la dimension distance afin de disposer de données correspondant à un ordre d'éloignement croissant en distance,
- découpage du tableau en bandes chevauchantes, parallèlement à l'axe azimut, de manière à avoir des bandes correspondant à des plages de distance étroites $\tau_i$ où peut être déterminé localement, en fonction des paramètres géométriques de la prise de vue, un filtre bidimensionnel de focalisation de l'image, ayant une réponse impulsionnelle $h_i(\tau, t, \tau_i)$ à deux variables temporelles $\tau$ distance et t azimut, et une fonction de correction de la phase parasite due à la compression d'impulsion, stationnaires dans la bande de distance $\tau_i$,
- filtrage des bandes de tableau par le filtre bidimensionnel de focalisation d'image dont la réponse impulsionnelle a été modifiée par la fonction de correction de la phase parasite, et
- juxtaposition des bandes de tableau résultant du filtrage pour obtenir un tableau des coefficients complexes de réflexion des points de la zone de terrain illuminée, et
- construction d'une image de la zone illuminée à partir des modules des coefficients complexes de réflexion figurant dans le tableau obtenu à l'étape précédente.

Avantageusement la durée $T_d$ de la rampe de démodulation est prise égale à la durée T d'une impulsion modulée linéairement en fréquence émise.

Avantageusement, la durée utile $T_a$ de démodulation est prise égale à la durée T d'une impulsion modulée linéairement en fréquence émise, diminuée de la moitié de la durée $T_f$ de fauchée utile.

Avantageusement, le filtrage bidimensionnel des bandes de tableau par le filtre bidimensionnel de focalisation d'image à réponse impulsionnelle modifiée par la fonction de correction de la phase parasite se fait en passant dans les espaces des fréquences distance et azimut, par d'autres transformations monodimensionnelles de Fourier directes et inverses selon les deux dimensions distance et azimut du tableau des données de manière à éviter des calculs de convolution

D'autres caractéristiques et avantages de l'invention ressortiront de la description ci-après d'un mode de réalisation donné à titre d'exemple. Cette description sera faite en regard du dessin dans lequel :

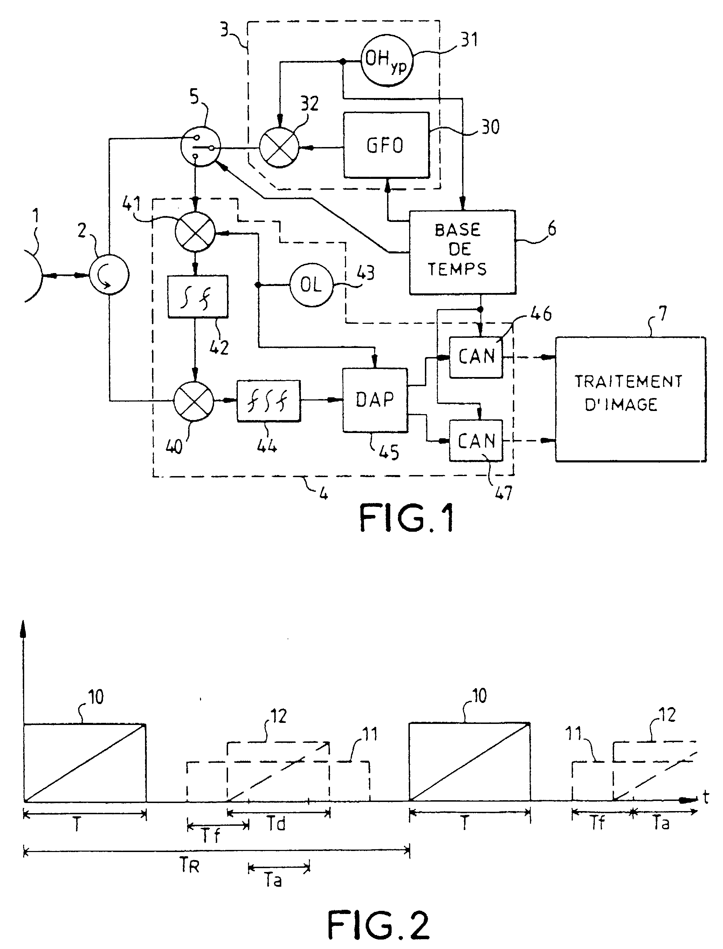

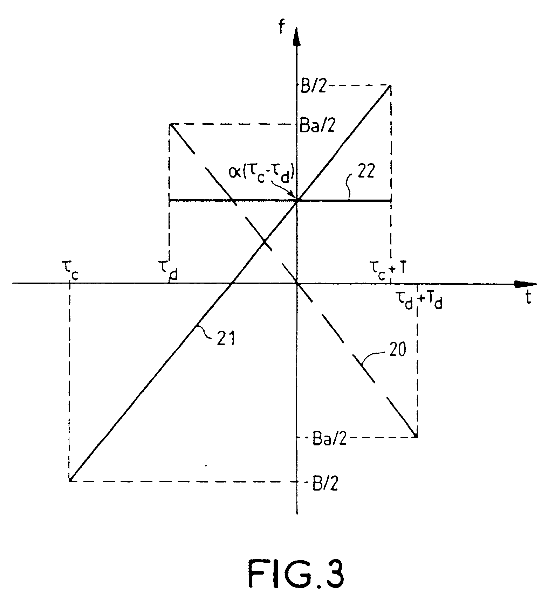

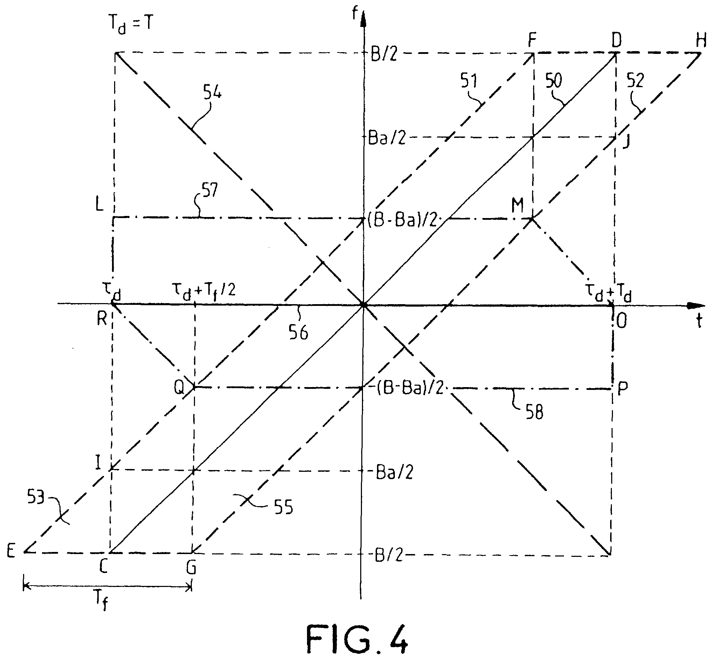

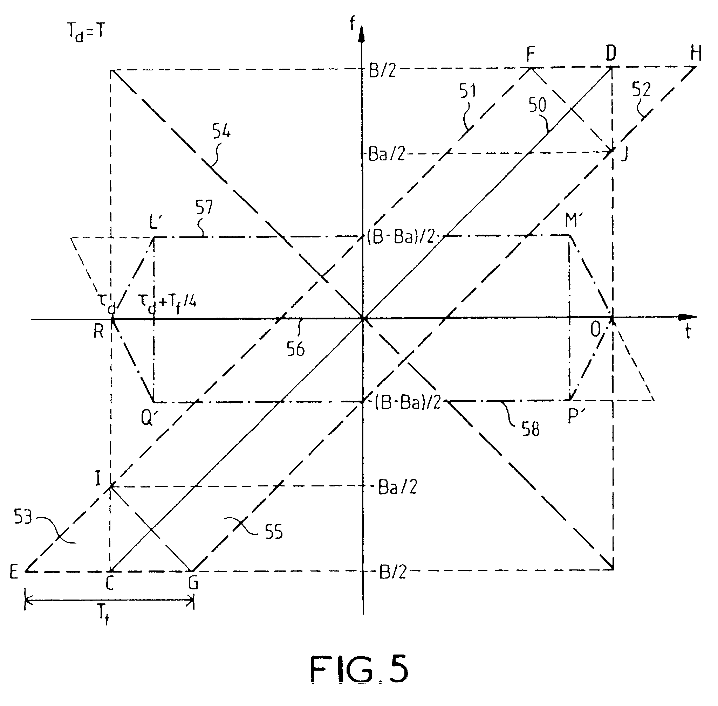

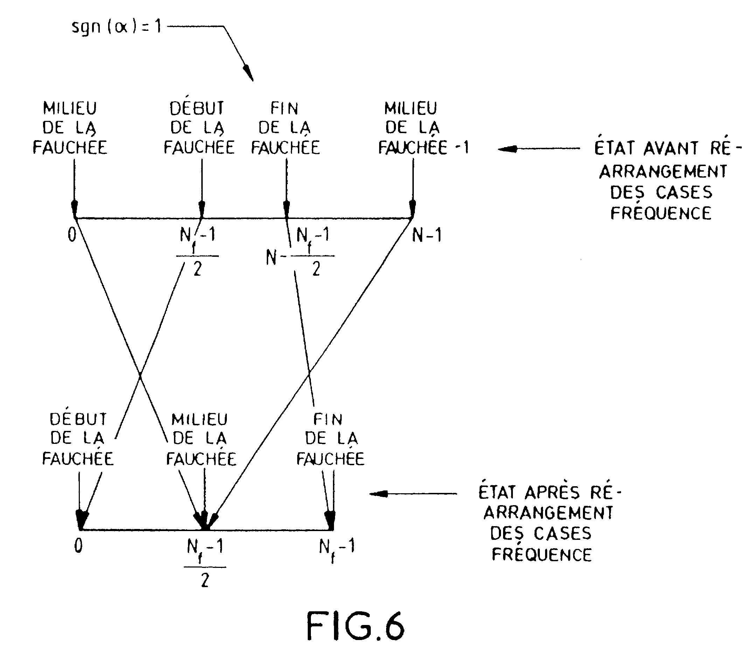

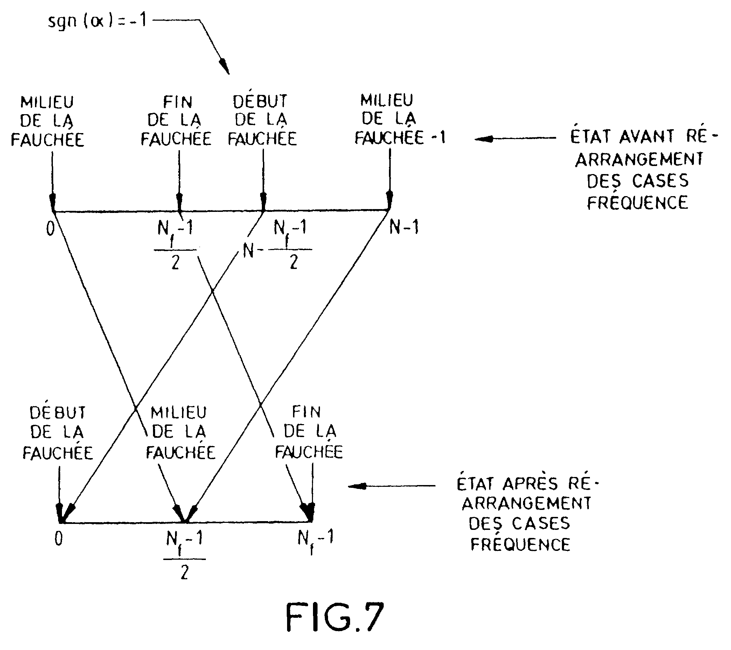

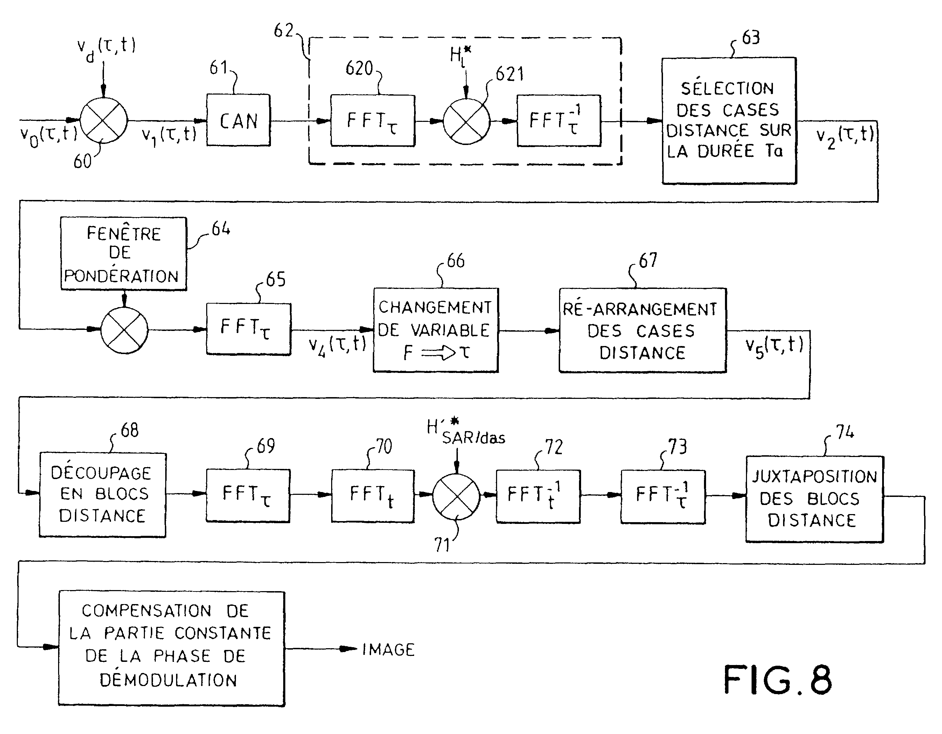

- une figure 1 représente de manière schématique un radar SAR de type Deramp
- une figure 2 est un chronogramme explicitant le séquencement des signaux émis et reçus par le radar de la figure 1,
- une figure 3 est un diagramme dans le domaine temps-fréquence explicitant la manière dont est réalisée une opération de démodulation et de compression d'impulsion dans un radar de type Deramp
- des figures 4 et 5 sont des diagrammes dans le domaine temps-fréquence explicitant le choix fait dans le procédé selon l'invention, d'un intervalle de temps commun adopté pour la démodulation de tous les signaux d'échos retournés par une zone utile de terrain ou fauchée en réponse à une impulsion émise par le radar de la figure 1,
- des figures 6 et 7 sont des schémas explicitant le réarrangement effectué après une première transformation de Fourier en distance, sur le tableau des données délivrées par un radar Deramp utilisé en radar à ouverture synthétique pour obtenir après compression d'impulsion des données disposées dans le tableau selon un ordre croissant de distance, et
- une figure 8 est un synoptique illustrant les principales étapes d'un procédé de traitement selon l'invention appliqué au signal de réception d'un radar de type Deramp utilisé en radar en synthèse d'ouverture en vue de faire de l'imagerie radar.

La figure 1 est un schéma synoptique d'un radar SAR monostatique à compression d'impulsion connu sous les diverses dénominations anglo-saxonnes : Deramp Deramping, Dechirping,..". Le radar, monté sur un porteur en déplacement au-dessus d'une zone du sol à imager, se compose d'une antenne 1 reliée par un circulateur 2 à une partie émission 3 et à une partie réception 4, avec un commutateur inverseur 5 qui est placé entre la partie émission 3 et le circulateur 2, et qui permet d'extraire de la partie émission 3, un signal de démodulation pour la partie réception 4, une base de temps 6 organisant le séquencement des divers signaux et enfin, un circuit de traitement d'image 7 souvent déporté au sol dans une station de télémétrie, assurant la construction d'une image à partir des données de vidéo brute délivrées par la partie réception 4.

La partie émission 3 comporte un générateur de forme d'onde GFO 30 engendrant, à une fréquence intermédiaire, des rampes linéaires de fréquence, une source hyperfréquence $OH_{yp}$ 31 engendrant une porteuse hyperfréquence et un mélangeur 32 connecté aux sorties du générateur de forme d'onde GFO 30 et de la source hyperfréquence SF 31 afin de délivrer des impulsions hyperfréquences modulées linéairement en fréquence à destination du commutateur inverseur 5, et au-delà, du circulateur 2 et de l'antenne 1 ainsi que de la partie réception 4.

La partie réception 4 comporte un mélangeur de démodulation 40 placé en entrée et recevant un signal hyperfréquence en provenance du circulateur 2 et de l'antenne 1, et un signal de démodulation issu de la partie émission 3. Ce signal de démodulation est constitué d'impulsions hyperfréquence modulées linéairement en fréquence engendrées par la partie émission 3, dérivées par l'intermédiaire du commutateur inverseur 5 et translatées dans une bande supérieure de fréquence au moyen d'un mélangeur 41 suivi d'un filtre passe-haut 42 et attaqué par un oscillateur local OL 43 à fréquence intermédiaire. Le mélangeur de démodulation 40 est suivi d'un filtre passe-bande 44 permettant de sélectionner la plage de fréquence utile, c'est-à-dire le domaine de distance observé ou la fauchée utile, d'un démodulateur amplitude-phase DAP 45 recevant la porteuse à fréquence intermédiaire de l'oscillateur local OL 43 et de deux convertisseurs analogique-numérique 46, 47 assurant l'échantillonnage et la conversion en numérique des parties en phase et en quadrature du signal vidéo brute de réception, à une double cadence : une cadence rapide correspondant à la succession des portes distance découpant le temps d'écoute du radar entre chaque émission d'une impulsion modulée linéairement en fréquence et une cadence lente correspondant à la succession des impulsions modulées linéairement en fréquence émises.

La base de temps 6 assure le séquencement des impulsions modulées linéairement en fréquence engendrées par la partie émission 3 afin qu'elles se répètent de manière cohérente par rapport au signal hyperfréquence de la source hyperfréquence SF 31, la manoeuvre du commutateur inverseur 5 de manière à avoir entre chaque impulsion modulée linéairement en fréquence transmise à l'antenne 1, une impulsion modulée linéairement en fréquence dérivée vers la partie réception 4 pour la démodulation, et le double cadencement de l'échantillonnage du signal vidéo brute de réception effectué par les convertisseurs analogique-numérique 46, 47 de la partie réception 4. Pour accomplir cette tâche, la base de temps 6 est synchronisée sur le signal de la source hyperfréquence 31 de la partie émission.

Par suite de cette double cadence d'échantillonnage, il est habituel de présenter les échantillons du signal vidéo brute de réception délivré par la partie réception 4 sous la forme d'un tableau à deux dimensions : une dimension distance le long de laquelle sont alignés les échantillons du signal vidéo brute reçus en réponse à l'émission d'une impulsion modulée linéairement en fréquence et une dimension azimut le long de laquelle sont arrangées les suites successives d'échantillons de signal vidéo brute reçues pour les diverses impulsions modulées linéairement en fréquence émises. Un tel tableau d'échantillons de signal vidéo brute de réception est alors transmis à un dispositif de traitement d'image 7 pour y être traité dans les deux dimensions distance et azimut afin d'en tirer une image.

La figure 2 montre le séquencement des différents signaux d'un radar SAR à compression d'impulsion de type Deramp On y distingue les impulsions émises 10, de durée T, qui sont modulées linéairement en fréquence et se succèdent au bout d'un délai $T_R$, laissant entre elles pour la réception une durée $T_R$-T. La durée $T_R$-T entre les impulsions émises est occupée par une période de réception 11 qui débute avec le commencement d'un écho dû à une cible proche située en début de fauchée utile et qui s'achève avec la fin d'un écho dû à une cible éloignée située en fin de fauchée utile. Quelque part dans la période de réception apparaît une impulsion de démodulation 12 qui est la recopie d'une partie de l'impulsion émise de durée $T_d$ et qui apparaît avec un retard tel qu'elle soit centrée sur le milieu de la fauchée utile. Deux délais intéressants apparaissent sur cette figure 2, le délai $T_f$ qui correspond à la durée de la fauchée utile et qui est l'intervalle de temps séparant la réception des échos des cibles situées en début et en fin de fauchée, et le délai $T_a$ qui est la durée habituelle d'analyse, ici le temps pendant lequel tous les échos retournés par les cibles situées dans la fauchée utile sont reçus simultanément.

La figure 3 illustre le principe de démodulation d'une impulsion modulée linéairement en fréquence.

Dans le domaine temps-fréquence, une impulsion modulée linéairement en fréquence peut être assimilée à une droite de pente $\alpha$ telle que :

$$|\alpha| = \frac{B}{T}$$

où B est la bande de fréquence de l'impulsion et T sa durée. On suppose ici que l'on a affaire à des impulsions modulées linéairement en fréquence dans le sens des fréquences croissantes et donc que les droites qui les représentent sont des rampes à pente a positive. En outre, on représente, par commodité, une impulsion utilisée pour la démodulation ou rampe de démodulation avec une pente négative -$\alpha$ car alors le processus de démodulation, qui consiste en un mélange soustractif de deux fréquences instantanées, se traduit sur la figure comme la somme point à point du signal utile et du signal de démodulation. Avec cette convention qui restera valable dans la suite de la description et en adoptant comme origine des coordonnées le centre d'une impulsion de démodulation, la rampe de démodulation apparaît comme un segment de droite 20 de pente négative -$\alpha$, tracé en tirets et passant par l'origine. Ce segment de droite 20 débute à un instant $\tau_d$, se termine à un instant $\tau_d+T_d$, $T_d$ étant la durée de la rampe de démodulation, et occupe une bande de fréquence [+$B_a$/2, -$B_a$/2]. Un écho en réponse d'une cible apparaît comme un segment de droite 21 de pente a, tracé en trait plein débutant à un instant $\tau_c$ au bas -B/2 de la bande de fréquence d'une impulsion émise et se terminant à un instant $\tau_c$+T au sommet B/2 de la bande de fréquence d'une impulsion émise. Il en résulte qu'il donne après démodulation un signal vidéo brute constitué d'une fréquence pure :

$$f_{c/d} = -\alpha\left(\tau_c - \tau_d\right)$$

représenté sur la figure 3 par un segment de droite horizontal 22 en trait plein, débutant l'instant le plus tardif entre $\tau_c$ ou $\tau_d$ ici $\tau_d$ et se terminant à l'instant le plus précoce entre $\tau_c$ + T ou $\tau_d$ + $T_d$ ici $\tau_c$ + T. On voit donc que le signal vidéo brute de réception résultant de la démodulation de l'écho dû à une cible est une sinusoïde dont la fréquence est proportionnelle au retard relatif de l'écho de la cible par rapport à l'instant de déclenchement de la rampe de démodulation.

De façon plus précise, on peut exprimer le signal émis, le signal reçu associé à une cible correspondant à un temps de propagation $\tau_c$, et le signal de démodulation déclenché à l'instant $\tau_d$ respectivement par :

$$\begin{cases} p(\tau) = rect\left[\dfrac{\tau}{T}\right]\cos 2\pi\left(f_c\tau + \dfrac{1}{2}\alpha\tau^2\right) \\ p(\tau - \tau_c) \\ p(\tau - \tau_d)rect\left[\dfrac{\tau}{T_d}\right] \end{cases}$$

où $f_c$ est la fréquence centrale d'une impulsion, $\alpha$ le rapport de la bande de fréquence B d'une impulsion émise sur sa durée T et $T_d$ la durée de la rampe de démodulation. A l'issue de la démodulation, le signal reçu associé à cette cible est donc donné par :

$$\begin{aligned} p(\tau - \tau_c)p(\tau - \tau_d) &= rect\left[\frac{\tau - \tau_c}{T}\right]rect\left[\frac{\tau - \tau_d}{T_d}\right] \\ &\times \frac{1}{2}\left\{\cos\left[-2\pi f_c(\tau_c - \tau_d) + \pi\alpha\left(\tau_c^2 - \tau_d^2\right) - 2\pi\alpha(\tau_c - \tau_d)\tau\right] \right. \\ &\left. + \cos\left[4\pi f_c\tau - 2\pi f_c(\tau_c + \tau_d) + \pi\alpha\left\{(\tau - \tau_c)^2 + (\tau - \tau_d)^2\right\}\right]\right\} \end{aligned}$$

Le deuxième terme en cosinus disparaît après le filtrage passe-bande 44 qui intervient juste après la démodulation. Le rôle du filtrage passe-bande 44 est d'éliminer les fréquences image engendrées par le mélangeur de démodulation 40 et aussi, comme on l'a précisé précédemment, de sélectionner la fauchée utile et d'empêcher les cibles voisines de la fauchée utile de venir parasiter la fauchée utile après échantillonnage.

Le premier terme en cosinus qui est le seul à subsister après démodulation et filtrage montre que le signal vidéo brute de réception en provenance d'une cible est une sinusoïde dont la fréquence $-\alpha(\tau_c - \tau_d)$ est proportionnelle au retard relatif de la cible par rapport à l'instant de déclenchement de la rampe de démodulation comme cela ressortait déjà du diagramme temps-fréquence de la figure 3, et dont le déphasage est fonction du temps de propagation d'écho $\tau_c$ et de l'instant de déclenchement $\tau_d$ du signal de démodulation.

Le signal d'écho $v_0(\tau,t)$ reçu avant décompression à un instant distance $\tau$ et un instant azimut t, résulte d'une convolution à deux dimensions distance et azimut entre la réflectivité complexe du terrain $\gamma(\tau,t)$ illuminé, recherchée pour tracer l'image du terrain, et le produit du type d'impulsion émise $p(\tau)$ par la réponse impulsionnelle $h_{SAR}(\tau,t)$ du filtre de focalisation image déterminée sans tenir compte de la compression d'impulsion distance, uniquement en fonction des paramètres géométriques de la prise de vue et supposée stationnaire pour une certaine bande distance, de sorte que l'on peut écrire, pour cette bande distance :

$$v_0(\tau,t) = \iint \gamma(\tau',t') p\left(\tau - \frac{T}{2} + \tau_0 - \tau_c(t - t' - T_e/2) - \tau'\right) h_{az}(t - t' - T_e/2) d\tau' dt'$$

où :

- $\tau_o$ désigne l'instant à partir duquel on commence à enregistrer les échantillons de signal vidéo brute de réception,
- $\tau_c$ est le temps de propagation du signal d'écho d'une cible,
- $T_e$ est la durée d'éclairement d'une cible par le radar en défilement azimutal,
- $p(\tau)$ désigne le type d'impulsion émise,
- $h_{SAR}(t)$ la réponse impulsionnelle du filtre de focalisation image compte non tenu de la compression d'impulsion, cette réponse impulsionnelle dépendant implicitement de la variable distance $\tau$ qui n'est pas mentionnée dans un soucis de simplification d'écriture et étant telle que :

$$h_{SAR}(t) = rect\left[\frac{t}{T_e}\right] g_{az}(t) \exp\left[-i2\pi f_c \tau_c(t)\right]$$

le terme de phase constant $\exp[i2\pi f_c \tau_d]$ étant omis dans un but de simplification, $f_c$ désignant la fréquence centrale d'une impulsion émise et $g_{az}(t)$ le diagramme d'ouverture azimutale de l'antenne du radar.

Dans la suite des développements, on assimilera, afin d'alléger les expressions mathématiques :

$$\tau_c\left(t - t' - T_e/2\right) \Leftrightarrow \tau_c$$

L'impulsion émise étant une impulsion modulée linéairement en fréquence de bande de fréquence B, de durée T et de pente de modulation $|\alpha| = B/T$, on peut poser :

$$p(\tau) = rect\left[\frac{\tau}{T}\right] \exp\left[i2\pi \frac{1}{2}\alpha\tau^2\right]$$

La rampe de démodulation est caractérisée par son instant de déclenchement $\tau_d$ et sa durée $T_d$. L'expression de son enveloppe complexe est donnée par :

$$r_d(\tau) = p_d^*\left(\tau - \frac{T_d}{2} - \tau_d + \tau_0\right)$$

On en déduit que l'expression du signal reçu après démodulation s'écrit :

$$v_1(\tau,t) = \iint \gamma(\tau',t') h_{SAR}(t - t' - T_e/2)$$
$$\times p\left(\tau - \frac{T}{2} + \tau_0 - \tau_c - \tau'\right) p_d^*\left(\tau - \frac{T_d}{2} + \tau_0 - \tau_d\right) d\tau' dt'$$

$$(1)$$

L'analyse de cette expression montre que pour être capable d'évaluer la réflectivité complexe $\gamma(\tau,t)$ du terrain illuminé par le radar afin d'en construire une image radar, il ne suffit pas de connaître la réponse impulsionnelle $h_{SAR}$ (t) du filtre de focalisation image défini en l'absence de compression d'impulsion mais il faut encore être capable d'évaluer les produits des échos d'impulsions retournés par les cibles $p()$ par la rampe de démodulation $p_d^*()$. Ce produit, une fois développé, contient deux termes :

- un terme définissant un support temporel :

$$rect\left[\frac{\tau - T/2 + \tau_0 - \tau_c - \tau'}{T}\right] \times rect\left[\frac{\tau - T_d/2 + \tau_0 - \tau_d}{T_d}\right]$$

- un terme de phase associé à la démodulation :

$$\exp\left[i2\pi \frac{1}{2}\alpha\left\{(\tau - T/2 + \tau_0 - \tau_c - \tau')^2 - (\tau - T_d/2 + \tau_0 - \tau_d)^2\right\}\right]$$

qui s'écrit encore :

$$\exp\left[i2\pi \frac{1}{2}\alpha\left\{(\tau_c + \tau')^2 - \tau_d^2 + \frac{T^2}{4} - \frac{T_d^2}{4} + T(\tau_c + \tau') - T_d\tau_d\right\}\right]$$
$$\exp\left[-i2\pi\alpha\left\{(\tau_c + \tau') - \tau_d + (T - T_d)/2\right\}(\tau + \tau_0)\right]$$

Le support temporel définit l'intervalle de temps pendant lequel le signal d'écho renvoyé par une cible existe et est démodulé. Cet intervalle de temps a une position sur l'axe distance et une durée variables en fonction de la position en distance de la cible considérée dans la fauchée utile et de la position en distance de la rampe de démodulation qui est de manière habituelle le milieu de la fauchée utile. Une résolution en distance constante sur la fauchée utile, impose d'adopter des supports temporels de même durée pour les signaux d'échos de toutes les cibles, quelles que soient leurs positions en distance dans la fauchée utile. Cela conduit à prendre des dispositions pour que les supports temporels réellement utilisés pour les signaux de toutes les cibles de la fauchée utile aient la même durée.

Le terme de déphasage associé à la démodulation provient du fait que les supports temporels des signaux d'écho des cibles ont une position par rapport aux signaux d'écho des cibles eux-mêmes, qui varie en fonction de la position en distance des cibles.

Pour construire une image à partir du signal de vidéo brute de réception délivré par un radar de type Deramp il faut donc, en plus des opérations habituelles de traitement d'image, s'affranchir de la dépendance de la durée du support temporel utilisé pour la démodulation du signal d'écho renvoyé par une cible, en fonction de la position en distance de cette cible dans la fauchée utile, et corriger les effets d'un éventuel terme de phase associé à la démodulation et dû à une variation de position du support temporel utilisé pour la démodulation du signal d'écho renvoyé par une cible par rapport au signal d'écho lui-même en fonction de la position en distance de la cible.

On se propose, pour avoir un maximum de signaux de réception démodulés et donc une résolution distance à la fois uniforme et maximale sur la fauchée utile, d'utiliser au mieux une rampe de démodulation de durée maximum égale à la durée T d'une impulsion émise pour obtenir un support temporel de démodulation unique pour tous les signaux d'écho de la fauchée utile et de durée maximale. Cela conduit à adopter une durée utile $T_a$ commune à l'ensemble des signaux démodulés d'une fauchée utile égale à la durée minimale de démodulation que l'on rencontre pour les signaux d'écho de cibles situées en distance aux extrémités de la fauchée utile. Cette durée minimale étant égale à la durée T d'une impulsion émise diminuée de la moitié de la durée $T_f$ de la fauchée utile, on vise une durée utile $T_a$ égale à :

$$T_a = T - T_f/2$$

Cette durée utile $T_a$ qui doit être commune à tous les signaux d'écho quelle que soit la position en distance dans la fauchée utile des cibles dont ils proviennent est centrée sur la rampe de démodulation. Comme elle est trop étendue pour être occupée simultanément par tous les signaux d'écho des cibles de la fauchée utile, on est contraint de retarder les signaux de démodulation qui sont en avance par rapport à elle, ceux provenant des cibles situées en distance dans le premier quart de la fauchée utile, et d'anticiper les signaux de démodulation en retard par rapport à elle, ceux provenant des cibles situées en distance dans le dernier quart de la fauchée utile. Pour ce faire, on profite du fait que les signaux d'échos démodulés sont des fréquences pures dépendant de la position en distance des cibles qui en sont à l'origine, pour les repositionner entre eux dans le temps à l'aide d'une ligne dispersive. Comme on le verra ultérieurement, ce repositionnement, qui permet à tous les signaux d'écho démodulés de la fauchée utile de recouvrir la durée utile $T_a$, ne peut cependant pas permettre de faire que la durée utile $T_a$ soit occupée par la même partition de chacun des signaux d'écho. Il en résulte la persistance après démodulation d'un terme de phase variable en fonction de la position en distance dans la fauchée utile de la cible à l'origine du signal d'écho démodulé qu'il faut compenser dans un traitement SAR ultérieur de construction d'image radar.

Les figures 4 et 5 sont des diagrammes temps-fréquence qui illustrent ce choix de support temporel de démodulation. On y distingue un système d'axes temps-fréquence ayant pour origine temporelle le temps de propagation d'écho correspondant au milieu de la fauchée utile et pour origine fréquentielle le milieu de la bande de fréquence [-B/2, B/2] d'une impulsion émise. Dans ce système d'axes temps-fréquence sont tracés :

- un segment de droite 50 CD de pente α représenté en trait plein, passant par l'origine et correspondant à la réponse à une impulsion émise, d'une cible située en distance, en milieu de fauchée utile. Cette réponse est centrée sur l'origine et dure le temps d'une période T d'une impulsion émise.
- deux segments de droite EF et GH 51, 52 de pente α représentés en tiretets de part et d'autre du segment de droite 50 et correspondant aux réponses de durée T de deux cibles à une impulsion émise : l'une 51 située en distance en début de fauchée utile, l'autre 52 située en distance en fin de fauchée utile. Ces deux segments de droite parallèles 51, 52 sont séparés en temps d'une durée $T_f$ correspondant à la largeur en distance de la fauchée utile. Leurs extrémités HGEF forment les sommets d'un parallélogramme 53 délimitant dans le domaine temps-fréquence, la surface occupée par les échos retournés par toutes les cibles de la fauchée utile.
- un segment de droite 54 de pente -α représenté en tirets, passant par l'origine et correspondant à la rampe de démodulation utilisée de durée T. Celle-ci débute dans le temps à un instant $\tau_d$ placé au commencement de la réception d'un écho 51 d'une cible située en distance à l'extrémité éloignée de la fauchée utile, se termine dans le temps à un instant $\tau_d + T_d$ ou $\tau_d + T$ et occupe une bande de fréquence [-B/2, B/2] correspondant à celle de l'impulsion émise.

A l'instant $\tau_d$ où débute la rampe de démodulation, l'impulsion modulée linéairement en fréquence renvoyée par une cible placée en distance à l'extrémité proche de la fauchée utile a déjà commencé, si bien que seule sa partie arrière occupant une bande de fréquence [-$B_a$/2, B/2] est démodulée. De même, à ce même instant $\tau_d$ l'impulsion modulée linéairement renvoyée par une cible placée en distance à l'extrémité éloignée de la fauchée utile n'a pas commencé, si bien que seule sa partie avant occupant une bande de fréquence [-B/2, $B_a$/2] est démodulée. Ainsi, seule est démodulée la partie des signaux d'échos reçus de la fauchée utile occupant dans les diagrammes temps-fréquence des figures 4 et 5 la surface de l'hexagone ayant pour sommet le point C, la projection I du point C parallèlement à l'axe des fréquences sur le segment de droite EF 51, les points F et D, et la projection J du point D parallèlement à l'axe des fréquences sur le segment de droite GH 52.

Après démodulation, les signaux d'écho de cible sont transformés en sinusoïdes pures apparaissant sur les diagrammes temps-fréquence des figures 4 et 5 sous forme de segments de droite horizontaux comme cela a été expliqué relativement à la figure 3. Parmi eux, on distingue le segment de droite horizontal 56, tracé en trait épais sur l'axe des temps, qui correspond à la démodulation du signal d'écho 51 d'une cible située en distance au milieu de la fauchée utile, le segment de droite 57 tracé en tiretets, qui correspond à la démodulation du signal d'écho 51 d'une cible située en distance en début de fauchée utile et le segment de droite 58 tracé en tiretets, qui correspond à la démodulation du signal d'écho 52 d'une cible située en distance en fin de fauchée utile.

La figure 4 montre les positions respectives des signaux d'écho provenant de la fauchée utile après leur démodulation par la rampe de démodulation 54. Ils occupent la surface d'un parallélogramme tronqué LMOPQR. Le choix d'un support temporel commun de démodulation revient à inscrire un rectangle dans la surface de ce parallélogramme tronqué. On voit alors que sans traitement particulier la largeur temporelle du plus grand rectangle inscriptible se limite à $T-T_f$, ce qui revient à n'utiliser que la partie des signaux d'écho de la fauchée utile appartenant à la surface du rectangle GQFM.

Pour augmenter la partie utilisée des signaux d'écho de la fauchée utile, on propose alors de déformer le parallélogramme tronqué LMOPQR de la figure 4 occupé par les signaux d'écho démodulé de manière à pouvoir y inscrire un rectangle de plus grande largeur temporelle. Cela s'obtient, comme représenté à la figure 5 en appliquant aux signaux d'écho démodulé un retard fonction de leurs fréquences tel que le parallélogramme tronqué se transforme en un hexagone L'M'OP'Q'R symétrique par rapport à l'axe des temps. On peut alors y inscrire à l'intérieur un rectangle L'M'P'Q' de largeur temporelle $T-T_f/2$, ce qui revient à utiliser la partie des signaux d'écho de la fauchée utile appartenant à la surface rectangulaire IFJG. On récupère ainsi la moitié de la surface des signaux d'écho négligée précédemment. On remarque cependant, que, comme dans le cas précédent, si l'on obtient bien un support temporel commun pour la démodulation de tous les signaux d'écho de la fauchée utile, les parties des signaux d'écho prises en compte ont des retards variables par rapport aux signaux d'écho eux-mêmes, qui sont à l'origine d'une modulation de phase parasite.

Pour retarder les signaux d'écho démodulé, en fonction de leurs fréquences respective, on utilise un filtre dont la réponse impulsionnelle est telle que sa fréquence instantanée est une fonction linéaire du temps comme pour une impulsion modulée linéairement en fréquence. Ce type de filtre est également appelé ligne dispersive à cause des moyens technologiques utilisés pour le fabriquer ou générer des formes d'onde modulées linéairement en fréquence (par exemple dispositif S.A.W. d'ondes acoustiques de surface).

Pour comprendre l'effet du passage dans une ligne dispersive, des signaux d'écho démodulés, on s'intéresse à l'effet d'une ligne dispersive sur un signal purement sinusoïdal de fréquence $f_o$ et de durée T tel que :

$$s(t) = rect\left[\frac{t-t_0}{T}\right]e^{i2\pi f_0 t}$$

L'application de ce signal en entrée d'une ligne dispersive de réponse impulsionnelle :

$$h_l(t) = e^{i2\pi\frac{1}{2}Kt^2}$$

provoque l'apparition en sortie de la ligne dispersive d'un signal de la forme :

$$s(t)*h_l(t) = \int e^{i2\pi\frac{1}{2}Kt'^2} rect\left[\frac{t-t_0-t'}{T}\right]e^{i2\pi f_0(t-t')}dt'$$

$$= e^{i2\pi f_0 t}e^{-i2\pi\frac{f_0^2}{2K}}\int rect\left[\frac{t-t_0-t'}{T}\right]e^{i2\pi\frac{1}{2}K\left(t'-\frac{f_0}{K}\right)^2}dt'$$

Or :

$$\int rect\left[\frac{t-t_0-t'}{T}\right]e^{i2\pi\frac{1}{2}K\left(t'-\frac{f_0}{K}\right)^2}dt' = \int\limits_{\frac{-T}{2}+t-t_0-\frac{f_0}{K}}^{\frac{T}{2}+t-t_0-\frac{f_0}{K}}e^{i2\pi\frac{1}{2}Kx^2}dx$$

L'évaluation du terme de droite de la relation précédente peut être menée à partir de celle de la fonction :

$$\Phi(t) = \int\limits_{t-\frac{T}{2}}^{t+\frac{T}{2}}e^{i2\pi\frac{1}{2}Kx^2}dx = \frac{1}{\sqrt{2|K|}}\int\limits_{\sqrt{2|K|}\left(t-\frac{T}{2}\right)}^{\sqrt{2|K|}\left(t+\frac{T}{2}\right)}e^{i\frac{\pi}{2}\mathrm{sgn}(K)y^2}dy$$

En effet, en posant :

$$\int\limits_{0}^{x}e^{i\frac{\pi}{2}t^2}dt = C(x) + iS(x)$$

où C et S désignent les intégrales de Fresnel, on obtient :

$$\Phi(t) = \frac{1}{\sqrt{2|K|}}\left\{C\left[\sqrt{2|K|}\left(t+\frac{T}{2}\right)\right] - C\left[\sqrt{2|K|}\left(t-\frac{T}{2}\right)\right]\right.$$
$$\left. + i\,\mathrm{sgn}(K)\left\langle S\left[\sqrt{2|K|}\left(t+\frac{T}{2}\right)\right] - S\left[\sqrt{2|K|}\left(t-\frac{T}{2}\right)\right]\right\rangle\right\}$$

Etant donné que :

$$\lim_{x\to+\infty}C(x) = \lim_{x\to+\infty}S(x) = \frac{1}{2}$$

quand on est dans les conditions où :

$$\sqrt{2|K|}\,T = \sqrt{2BT} >> 1$$

on peut écrire :

$$\Phi(t) \approx \frac{1}{\sqrt{2|K|}}rect\left[\frac{t}{T}\right](1 + i\,\mathrm{sgn}(K))$$
$$= \frac{1}{\sqrt{|K|}}rect\left[\frac{t}{T}\right]e^{i\pi\,\mathrm{sgn}(K)}$$

On en déduit que le signal de sortie de la ligne dispersive peut s'écrire :

$$s(t) * h(t) = \Phi\left(t - t_0 - \frac{f_0}{K}\right) e^{-i2\pi\frac{f_0^2}{2K}} e^{i2\pi f_0 t}$$

Cela montre que le passage d'un signal sinusoïdal pur dans une ligne dispersive se traduit par un retard $\Delta t$ égal à :

$$\Delta t = \frac{f_0}{K}$$

qui est fonction de la fréquence $f_o$ de la sinusoïde et de la pente K de modulation linéaire de fréquence de la ligne dispersive ainsi que par un déphasage parasite :

$$e^{-i2\pi\frac{f_0^2}{2K}}$$

également dépendant de la fréquence $f_o$ et de la pente K de modulation linéaire de fréquence de la ligne dispersive.

Dans le calcul précédent, on a fait l'hypothèse que la durée de la ligne dispersive est infinie. En pratique, le résultat obtenu reste valable pour une durée finie tant que la fréquence de la sinusoïde d'entrée appartient à la bande de la ligne dispersive.

La résolution spatiale distance est inversement proportionnelle à la bande de fréquence $B_a$ occupée par la partie démodulée utilisée des signaux d'écho de la fauchée utile :

$$B_a = I\alpha I T_a$$

Pour étudier l'expression du support temporel utile après démodulation pour une cible quelconque à la position temporelle $\tau' + \tau_c$, on commence par s'intéresser aux caractéristiques de la première et de la dernière cible de la fauchée utile. La position temporelle de la première cible vérifie la relation :

$$\tau_{df} + T = \tau_d - T_a$$

La position temporelle de la dernière cible vérifie quant à elle la relation :

$$\tau_{ff} = \tau_d + T_d - T_a$$

Ces deux dernières expressions qui traduisent l'utilisation de la durée d'analyse commune $T_a$ maximale, permettent de retrouver la largeur de la fauchée utile :

$$T_f = T + T_d - 2T_a$$

ainsi que la position temporelle du milieu de la fauchée utile :

$$\tau_{mf} = \tau_d - \frac{T - T_d}{2}$$

On remarque que, dans le cas des figures 4 et 5 où l'on a pris $T_d = T$, il vient :

$$T_f = 2(T - T_a)$$

La largeur de la fauchée est ici supérieure à la différence entre la durée T de l'impulsion émise et la durée du support temporel $T_a$ utilisé pour la démodulation. On remarque en outre que la bande spectrale occupée par les signaux d'écho en provenance de la fauchée utile est donnée par :

$$B_{FI} = \frac{B}{T} T_f = 2B\left(1 - \frac{T_a}{T}\right)$$

Il en résulte que la fréquence d'échantillonnage $F_e$ des convertisseurs analogique-numérique 46, 47 placés sur les voies de sortie du démodulateur amplitude-phase DAP 45 de la partie réception du radar Deramp qui correspond à la cadence rapide d'échantillonnage en distance, doit être au minimum égale à cette bande $B_{FI}$ pour respecter le théorème de Nyquist. Dans la pratique, il est nécessaire de prendre une marge de sur-échantillonnage qui dépend du gabarit de filtrage équivalent du récepteur. Ce sur-échantillonnage est en général plus important que pour un mode de compression d'impulsion par corrélation car ici, les signaux parasites susceptibles de se replier dans la bande utile comprennent les cibles voisines de la fauchée utile en plus du bruit thermique.

En se plaçant au niveau de la démodulation par la rampe modulée linéairement en fréquence, les instants de début et de fin du support temporel utile de durée $T_a$ pendant lequel le signal d'écho de la première cible de la fauchée utile est effectivement démodulé sont respectivement donnés par :

$$\tau_d \text{ et } \tau_d + T_a$$

Ceux de la dernière cible de la fauchée utile sont donnés par :

$$\tau_d + T_d - T_a \text{ et } \tau_d + T_d$$

Par proportionnalité, on en déduit que les instants de début et de fin du support temporel utile pour une cible quelconque à la position temporelle $\tau' + \tau_c$ sont donnés respectivement par :

$$\tau_d + \left(\tau' + \tau_c - \tau_d - T_a + T\right)\frac{T_d - T_a}{T_d + T - 2T_a}$$

$$\tau_d + T_a + \left(\tau' + \tau_c - \tau_d - T_a + T\right)\frac{T_d - T_a}{T_d + T - 2T_a}$$

Par conséquent, le milieu du support temporel de cette cible vaut :

$$\tau_d + T_a/2 + \left(\tau' + \tau_c - \tau_d - T_a + T\right)\frac{T_d - T_a}{2\left(T_d + T - 2T_a\right)}$$

et l'expression du support temporel utile est :

$$\text{rect}\left[\frac{\tau + \tau_0 - \tau_d - T_a/2 - \left(\tau' + \tau_c - \tau_d - T_a + T\right)\dfrac{T_d - T_a}{2\left(T_d + T - 2T_a\right)}}{T_a}\right]$$

en tenant compte de l'instant $\tau_o$ à partir duquel on commence à stocker les échantillons numérique du signal vidéo brute démodulé.

Le signal vidéo brute $v_1(\tau,t)$ délivré par le radar Deramp après une démodulation effectuée dans de telles conditions, peut alors se mettre sous la forme :

$$v_1(\tau,t) = \iint \gamma(\tau',t') h_{SAR}(t - t' - T_e/2)$$

$$rect\left[\frac{\tau + \tau_0 - \tau_d - T_a/2 - \dfrac{T_d - T_a}{2(T_d + T - 2T_a)}(\tau_c + \tau' - \tau_d - T_a + T)}{T_a}\right]$$

$$\exp\left[i2\pi\frac{1}{2}\alpha\left\{(\tau_c + \tau')^2 - \tau_d^2 + \frac{T^2}{4} - \frac{T_d^2}{4} + T(\tau_c + \tau') - T_d\tau_d\right\}\right]$$

$$\exp\left[-i2\pi\alpha\left\{(\tau_c + \tau') - \tau_d + (T - T_d)/2\right\}(\tau + \tau_0)\right] d\tau' dt'$$

On a vu, relativement aux figures 4 et 5, que pour rendre commun le support temporel utilisé pour la démodulation des signaux d'écho de toutes les cibles de la fauchées utile, on faisait passer le signal démodulé dans une ligne dispersive. Il se pose donc le problème de déterminer la pente K de modulation linéaire de fréquence de cette ligne dispersive. Pour le résoudre, on remarque que le milieu de la fauchée utile est à la position temporelle :

$$\tau_{mf} = \tau_d - \frac{T - T_d}{2}$$

qu'à l'issue de la démodulation, le signal ayant pour origine une cible en milieu de fauchée utile a une fréquence nulle, n'est donc pas retardé par une ligne dispersive et a un support temporel utile dont le milieu est à la position temporelle :

$$\tau_d + T_d/2$$

De plus le signal démodulé provenant d'une cible à la position temporelle $\tau' + \tau_c$ a une fréquence qui vaut :

$$-\alpha\left(\tau' + \tau_c - \tau_d + (T - T_d)/2\right)$$

On en déduit que la pente K de modulation linéaire de fréquence de la ligne dispersive doit vérifier la relation :

$$-\tau_d - T_a/2 - \frac{T_d - T_a}{2(T_d + T - 2T_a)}(\tau' + \tau_c - \tau_d - T_a + T) + \frac{\alpha}{K}(\tau' + \tau_c - \tau_d + (T - T_d)/2) = -\tau_d - T_d/2$$

D'où :

$$K = \alpha\,\frac{T_d + T - 2T_a}{T_d - T_a} = \alpha\Gamma \qquad (2)$$

Dans le cas limite où $T_d = T_a$, la pente de modulation linéaire de fréquence de la ligne dispersive devient infinie, ce qui signifie qu'aucun retard ne doit être appliqué quelle que soit la fréquence et donc que la ligne dispersive devient inutile. Dans ce cas limite, la durée de la rampe de démodulation est nécessairement inférieure à $T-T_f$ de sorte que tous les signaux d'écho de la fauchée utile recouvrent entièrement la rampe de démodulation et qu'il n'est donc plus nécessaire de les décaler dans le temps pour avoir un support temporel utile commun.

Tout calcul fait, l'expression du signal d'écho démodulé sur la durée utile $T_a$, après passage dans une ligne dispersive à pente de modulation linéaire de fréquence répondant à la relation (2) est donnée par :

$$v_2(\tau,t) = \iint \gamma(\tau',t')h_{SAR}\left(t-t'-T_e/2\right)rect\left[\frac{\tau+\tau_0-\tau_d-T_d/2}{T_a}\right]\frac{1}{\sqrt{|K|}}e^{i\pi/4\,\mathrm{sgn}(K)}$$

$$\exp\left[i2\pi\frac{1}{2}\alpha\left\{\left(\tau_c+\tau'\right)^2-\tau_d^2+\frac{T^2}{4}-\frac{T_d^2}{4}+T\left(\tau_c+\tau'\right)-T_d\tau_d\right\}\right]$$

$$\exp\left[-i2\pi\frac{1}{2}\frac{\alpha}{\Gamma}\left\{\left(\tau_c+\tau'\right)-\tau_d+\left(T-T_d\right)/2\right\}^2\right]$$

$$\exp\left[-i2\pi\alpha\left\{\left(\tau_c+\tau'\right)-\tau_d+\left(T-T_d\right)/2\right\}\left(\tau+\tau_0\right)\right]d\tau'dt'$$

La fonction de fenêtrage rectangulaire rect() qui ne dépend plus des variables d'intégration $\tau'$ et t', peut être sortie de l'intégrale double et ne constitue plus un obstacle à son calcul. Il reste alors à prendre en compte les termes de phase associés à la démodulation.

Après démodulation et passage dans la ligne dispersive, le signal vidéo brute délivré par un radar Deramp est soumis à une transformée de Fourier en distance avec une éventuelle pondération afin de discerner les échos des cibles de la fauchée utile qui ont chacun une fréquence dépendant de leur retard par rapport à l'instant de déclenchement de la rampe de démodulation. Soit :

$$v_2(\tau,t) \xrightarrow{\ TF_\tau\ } v_3(F,t)$$

avec :

$$v_3(F,t) = \frac{1}{\sqrt{|K|}}e^{i\pi/4\,\mathrm{sgn}(K)}\iint \gamma(\tau',t')h_{SAR}\left(t-t'-T_e/2\right)$$

$$\exp\left[i2\pi\frac{1}{2}\alpha\left\{\left(\tau_c+\tau'\right)^2-\tau_d^2+\frac{T^2}{4}-\frac{T_d^2}{4}+T\left(\tau_c+\tau'\right)-T_d\tau_d\right\}\right]$$

$$\exp\left[-i2\pi\frac{1}{2}\frac{\alpha}{\Gamma}\left\{\left(\tau_c+\tau'\right)-\tau_d+\left(T-T_d\right)/2\right\}^2\right]$$

$$\int rect\left[\frac{\tau+\tau_0-\tau_d-T_d/2}{T_a}\right]W\left(\frac{\tau+\tau_0-\tau_d-T_d/2}{T_a}\right)$$

$$\exp\left[-i2\pi\alpha\left\{\left(\tau_c+\tau'\right)-\tau_d+\left(T-T_d\right)/2\right\}\left(\tau+\tau_0\right)\right]e^{-i2\pi F\tau}d\tau d\tau'dt'$$

où W est une fenêtre de pondération utilisée pour limiter le niveau des lobes secondaires.

Or, on a :

$$\int \text{rect}\left[\frac{\tau + \tau_0 - \tau_d - T_d/2}{T_a}\right] W\left(\frac{\tau + \tau_0 - \tau_d - T_d/2}{T_a}\right)$$

$$\exp\left[-i2\pi\alpha\left\{(\tau_c + \tau') - \tau_d + (T - T_d)/2\right\}(\tau + \tau_0)\right]e^{-i2\pi F\tau}d\tau$$

$$= \int \text{rect}\left[\frac{x}{T_a}\right] W\left(\frac{x}{T_a}\right)\exp\left[-i2\pi\alpha\left\{(\tau_c + \tau') - \tau_d + (T - T_d)/2\right\}(\tau_d + T_d/2)\right]$$

$$\exp\left[-i2\pi F(\tau_d + T_d/2 - \tau_0)\right]\exp\left[-i2\pi\alpha\left\{(\tau_c + \tau') - \tau_d + (T - T_d)/2\right\}x\right]e^{-i2\pi Fx}dx$$

$$= T_a \exp\left[-i2\pi F(\tau_d + T_d/2 - \tau_0)\right]\exp\left[-i2\pi\alpha\left\{(\tau_c + \tau') - \tau_d + (T - T_d)/2\right\}(\tau_d + T_d/2)\right]$$

$$\text{wsinc}\left[T_a\left\{F + \alpha\left(\tau_c + \tau' - \tau_d + (T - T_d)/2\right)\right\}\right]$$

où wsinc est le noyau de la réponse impulsionnelle et représente un sinus cardinal pondéré.

On a aussi :

$$\exp\left[i2\pi\frac{1}{2}\alpha\Gamma'\left\{(\tau_c + \tau') - \tau_d + (T - T_d)/2\right\}^2\right] =$$

$$\exp\left[i2\pi\frac{1}{2}\alpha\left\{(\tau_c + \tau')^2 - \tau_d^2 + \frac{T^2}{4} - \frac{T_d^2}{4} + T(\tau_c + \tau') - T_d\tau_d\right\}\right]$$

$$\times \exp\left[-i2\pi\frac{1}{2}\frac{\alpha}{\Gamma}\left\{(\tau_c + \tau') - \tau_d + (T - T_d)/2\right\}^2\right]$$

$$\times \exp\left[-i2\pi\alpha\left\{(\tau_c + \tau') - \tau_d + (T - T_d)/2\right\}\left(\tau_d + \frac{T_d}{2}\right)\right]$$

avec :

$$\Gamma' = 1 - \frac{1}{\Gamma} = \frac{T - T_a}{T_d + T - 2T_a}$$

Finalement, après compensation des termes constants et simplification des termes de phase, on obtient :

$$v_4(F,t) = \iint \gamma(\tau',t')h_{SAR}(t - t' - T_e/2)\exp\left[i2\pi\frac{1}{2}\alpha\Gamma'\left\{\tau_c + \tau' - \tau_{mf}\right\}^2\right]$$

$$\times \text{wsinc}\left[T_a\left\{F + \alpha\left(\tau_c + \tau' - \tau_{mf}\right)\right\}\right]d\tau'dt'$$

$$(3)$$

La fenêtre de pondération W () utilisée peut être une fenêtre de Hamming telle que :

$$W\left(\frac{\tau}{T_a}\right) = \text{rect}\left[\frac{\tau}{T_a}\right]\left\{k + (1-k)\cos\left(2\pi\frac{\tau}{T_a}\right)\right\}$$

Dans ce cas, le noyau de la réponse impulsionnelle est donné par :

$$\text{wsinc}(x) = k\text{sinc}(\pi x) + \frac{1-k}{2}\{\text{sinc}[\pi(x+1)] + \text{sinc}[\pi(x-1)]\}$$

où x représente la variable réduite $x = FT_a$ et où le coefficient k prend une valeur inférieure à 1, par exemple 0,58.

En réalité, il est intéressant de prendre la transformée de Fourier discrète en distance des seuls échantillons du tableau de données vidéo brute de réception associés au support temporel utilisé pour la démodulation. Il est en effet raisonnable de ne pas introduire dans les calculs les échantillons parasites en dehors de ce support. Mathématiquement, cela revient à prendre la transformée de Fourier en distance du signal $v_1(\tau,t)$ avancé en distance de $\tau_d + T_d/2 - \tau_0 - T_a/2$. Dans ces conditions, on obtient un nouveau signal $v_3(F,t)$ tel que :

$$v_3(F,t) = \frac{1}{\sqrt{|K|}} e^{i\pi/4\,\text{sgn}(K)} \iint \gamma(\tau',t') h_{SAR}(t - t' - T_e/2)$$

$$\times \exp\left[i2\pi\frac{1}{2}\alpha\left\{(\tau_c + \tau')^2 - \tau_d^2 + \frac{T^2}{4} - \frac{T_d^2}{4} + T(\tau_c + \tau') - T_d\tau_d\right\}\right]$$

$$\times \exp\left[-i2\pi\frac{1}{2}\frac{\alpha}{\Gamma}\left\{(\tau_c + \tau') - \tau_d + (T - T_d)/2\right\}^2\right]$$

$$\times \int \text{rect}\left[\frac{\tau - T_a/2}{T_a}\right] W\left(\frac{\tau - T_a/2}{T_a}\right)$$

$$\exp\left[-i2\pi\alpha\left\{(\tau_c + \tau') - \tau_d + (T - T_d)/2\right\}\left(\tau + \tau_d + (T_d - T_a)/2\right)\right] e^{-i2\pi F\tau} d\tau d\tau' dt'$$

En reprenant la même démarche que précédemment, on obtient pour $v_4(F,t)$ la même expression qu'à la relation (3) après compensation d'un nouveau terme constant.

Le signal $v_4(F,t)$ est le signal vidéo brute après compression d'impulsion. Pour le rendre compatible avec les autres étapes de traitement plus spécifiques au traitement SAR, il est souhaitable de changer sa variable fréquentielle F contre une variable temporelle $\tau$ plus habituelle dans un signal vidéo brute de réception d'un radar SAR. On pose donc le changement de variable :

$$\tau = -\frac{F}{\alpha}$$

L'expression du signal vidéo brute de réception du radar Deramp après compression d'impulsion devient alors :

$$v_4(\tau,t) = \iint \gamma(\tau',t') h_{SAR}(t - t' - T_e/2) \exp\left[i2\pi\frac{1}{2}\alpha\Gamma'\left\{\tau_c + \tau' - \tau_{mf}\right\}^2\right]$$

$$\times \text{wsinc}\left[B_a\left\{\tau - (\tau_c + \tau' - \tau_{mf})\right\}\right] d\tau' dt'$$

En procédant à un nouveau changement de variable, il vient :

$$v_4(\tau,t) = \iint \gamma\left(\tau - u - \tau_c + \tau_{mf}, t'\right) h_{SAR}\left(t - t' - T_e/2\right) \exp\left[i2\pi\frac{1}{2}\alpha\Gamma'\{\tau - u\}^2\right]$$
$$\times \mathrm{wsinc}\left[B_a u\right] du\, dt'$$

ou encore :

$$v_4(\tau,t) = \mathrm{wsinc}\left[B_a\tau\right]*_\tau \int \gamma\left(\tau - \tau_c + \tau_{mf}, t'\right) \exp\left[i2\pi\frac{1}{2}\alpha\Gamma'\tau^2\right] h_{SAR}\left(t - t' - T_e/2\right) dt'$$

$$(4)$$

le signe $*_\tau$ désignant une opération de convolution selon la variable temporelle distance $\tau$.

Cette expression montre qu'après compression d'impulsion, le signal résultant est la convolution de la réponse impulsionnelle intrinsèque du traitement (sinus cardinal pondéré) avec le signal recherché (le terme sous intégrale) multiplié par un terme de phase parasite, retardé du temps de propagation et référencé par rapport au milieu de la fauchée utile. Comme indiqué précédemment, le terme de phase parasite provient du fait que les signaux démodulés, bien qu'ayant tous le même support temporel, ont des retards variables vis à vis des signaux d'écho qui en sont à l'origine, ces retards étant fonction des positions en distance dans la fauchée utile, des cibles ayant retourné les échos.

Pour appliquer un traitement d'image au tableau des données vidéo brute de réception d'un radar Deramp obtenues après compression d'impulsion par démodulation, passage dans une ligne dispersive, transformée de Fourier monodimensionnelle en distance et remplacement, dans la dimension distance, de la variable fréquentielle F par une variable temporelle $\tau$, il faut procéder à une remise en ordre des données en distance pour que celles-ci se succèdent par ordre croissant d'éloignement. En effet, le centre de la fauchée utile est associé par exemple à la fréquence nulle et il en résulte que par repliement du spectre, les fréquences négatives associées aux échos des cibles proches apparaissent dans le domaine des fréquences positives dans le haut de la bande occupée par les fréquences positives associées aux échos des cibles éloignées comme le montrent les figures 6 et 7.

En effet, soient :

- N le nombre d'échantillons ou données du tableau sur lequel a été effectuée la transformation de Fourier en distance,
- $F_e$ la fréquence d'échantillonnage du radar en distance,
- i l'indice de la case fréquence courante,

la relation entre une case fréquence et la fréquence associée est donnée par :

$$\begin{cases} 0 \le i \le N/2, & F = \dfrac{iF_e}{N} \\[2mm] N/2 < i < N, & F = \dfrac{(i-N)F_e}{N} \end{cases}$$

Comme la bande spectrale occupée par la fauchée utile couvre l'intervalle $[-B_{FI}/2, B_{FI}/2]$, on en déduit que le nombre $N_f$ de points utiles en sortie de la transformée de Fourier en distance vaut :

$$N_f = \mathrm{ODD}\left[\mathrm{rint}\left(N\frac{B_{FI}}{F_e}\right)\right]$$

où:

- rint est la fonction qui rend l'entier le plus proche de son argument

- ODD est la fonction qui rend son argument entier s'il est impair ou lui ajoute 1 dans le cas contraire.

La permutation des échantillons en sortie de la transformée de Fourier en distance peut donc se faire dans un vecteur de taille $N_f$. En raison de la relation :

$$\tau = -\frac{F}{\alpha}$$

qui lie la fréquence F au temps de propagation $\tau$ ou à la distance, il faut considérer deux cas suivant le signe de la pente $\alpha$ de modulation linéaire de fréquence de l'impulsion émise. En reprenant la notation $v_3$ pour le signal ou vecteur obtenu directement après la transformée de Fourier en distance et en notant $v_4$ le signal ou vecteur obtenu après réarrangement des cases fréquence, il vient :

$$\begin{cases} \mathrm{sgn}(\alpha) = -1, & v_4(i) = v_3\left[\left(N - \frac{N_f - 1}{2} + i\right) \bmod N\right], 0 \le i \le N_f - 1 \\ \mathrm{sgn}(\alpha) = 1, & v_4(i) = v_3\left[\left(N + \frac{N_f - 1}{2} - i\right) \bmod N\right], 0 \le i \le N_f - 1 \end{cases}$$

Ces relations de réarrangement sont illustrées à la figure 6 pour le cas où le signe de la pente de modulation $\alpha$ est positif et à la figure 7 pour le cas où le signe de la pente de modulation a est négatif.

Du point de vue mathématique, le réarrangement des cases fréquence se traduit par une modification de l'expression du signal $v_4(\tau, t)$ donnée par la relation (4) qui devient :

$$v_5(\tau, t) = \iint \gamma\left(\tau - u - \tau_c + \tau_{mf}, t'\right) h_{az}(t - t' - T_e/2) \exp\left[i 2\pi \frac{1}{2} \alpha \Gamma'\{\tau - u\}^2\right]$$
$$\times \mathrm{wsinc}[B_a u] \, du \, dt'$$

ou encore :

$$v_5(\tau, t) = \mathrm{wsinc}[B_a \tau]$$
$$*_\tau \int \gamma\left(\tau - \tau_c + \tau_{df}, t'\right) \exp\left[i 2\pi \frac{1}{2} \alpha \Gamma'\left(\tau + \tau_{df} - \tau_{mf}\right)^2\right] h_{az}(t - t' - T_e/2) \, dt'$$

$$(5)$$

On constate que le signal obtenu après une compression d'impulsion par ce mode de traitement est le résultat de la convolution de la réponse impulsionnelle intrinsèque du traitement (sinus cardinal pondéré) avec le signal recherché multiplié par un terme de phase parasite constitué d'une phase quadratique centrée sur le milieu de la fauchée utile.

On comprend alors pourquoi la solution qui consiste, pour compenser la phase parasite, à multiplier le signal comprimé directement par le conjugué du terme de phase parasite n'est pas satisfaisante. En effet, la correction n'est valable que pour le sommet de la réponse impulsionnelle du traitement de compression d'impulsion (pic du sinus cardinal pondéré). Cette correction n'est pas compatible avec un traitement d'extraction d'image SAR dans le domaine 2D spectral seul capable de fournir une réponse impulsionnelle correcte sur l'image finale pour les très hautes résolutions. En outre, il est certain qu'avec d'autres types de traitements d'extraction d'image SAR tels que par exemple le range-Doppler, cette correction de phase entraîne également une dégradation de la réponse impulsionnelle sur l'image.

Pour obtenir une compensation de phase parasite plus efficace, l'on remarque que la phase parasite introduite par la démodulation dépend de la position de la cible dans la fauchée. Or cette position dépend de l'instant considéré au cours du temps d'éclairement et peut être exprimée non seulement en distance par la variable $\tau + \tau_{df}$ comme c'est le cas dans la formule du déphasage parasite apparaissant dans l'expression du signal reçu après compression d'impulsion $v_5(\tau, t)$ développée à la relation (5), mais également en azimut par la variable $\tau_c$. Il y a donc équivalence entre les deux expressions :

$$\exp\left[i2\pi\frac{1}{2}\alpha\Gamma^{'}\left(\tau + \tau_{df} - \tau_{mf}\right)^2\right] \Leftrightarrow \exp\left[i2\pi\frac{1}{2}\alpha\Gamma^{'}\left(\tau_c - \tau_{mf}\right)^2\right]$$

En utilisant cette équivalence dans la relation (5), il vient :

$$v_5(\tau, t) = \text{wsinc}\left[B_a\tau\right] *_\tau \int \gamma\left(\tau - \tau_c + \tau_{df}, t'\right)$$
$$\times \exp\left[i2\pi\frac{1}{2}\alpha\Gamma^{'}\left(\tau_c(t - t' - T_e/2) - \tau_{mf}\right)^2\right] h_{SAR}(t - t' - T_e/2)dt'$$

Il est maintenant plus facile de déterminer comment compenser cette phase parasite dans la suite du traitement SAR de construction d'image. En effet, le terme de phase parasite vient alors compléter la réponse impulsionnelle du filtre traditionnel de focalisation d'image, ce qui revient à adopter un filtre de focalisation d'image modifié ayant pour nouvelle réponse impulsionnelle :

$$h_{SAR/das}(t) = h_{SAR}(t)\exp\left[i2\pi\frac{1}{2}\alpha\Gamma^{'}\left(\tau_c(t) - \tau_{mf}\right)^2\right]$$

En posant :

$$\tau_c(t) = \tau_{c0} + \tau'_c(t)$$

avec $\tau_{c0}$ représentant le temps de propagation au milieu du temps d'éclairement, il vient :

$$h_{SAR/das}(t) = h_{SAR}(t)\exp\left[i2\pi\frac{1}{2}\alpha\Gamma^{'}\left(\tau_{c0} - \tau_{mf}\right)^2\right]$$
$$\times \exp\left[-i2\pi\alpha\Gamma^{'}\left(\tau_{c0} - \tau_{mf}\right)\tau'_c(t)\right]\exp\left[i2\pi\frac{1}{2}\alpha\Gamma^{'}\tau'^2_c(t)\right]$$

$$(6)$$

Le premier terme exponentiel :

$$\exp\left[i2\pi\frac{1}{2}\alpha\Gamma^{'}\left(\tau_{c0} - \tau_{mf}\right)^2\right]$$

représente un terme de phase constant en azimut qui peut être compensé à l'issue du traitement de construction d'image sur le tableau des coefficients complexes de réflexion $\gamma(\tau, t)$ en tenant compte du fait que $\tau_{c0}$ représente alors la position du pixel courant dans la fauchée utile après compression et non dans la fauchée utile de l'image finale, une différence pouvant provenir en raison du nombre des cases distance de la marge négative utilisée lors du découpage en blocs distance opéré au cours du traitement de construction d'image qui sont éliminées en fin de traitement. Ce terme de phase, qui n'a pas d'influence sur l'image radar construite à partir des modules des coefficients complexes de réflexion de chaque point de la zone imagée, ne doit être compensé que dans les cas où il est nécessaire de connaître la phase du coefficient complexe de réflexion, par exemple lors que l'on désire effectuer des traitements d'interférométrie sur des images radar d'une même zone prises sous des angles différents.

Le deuxième terme exponentiel :

$$\exp\left[-i2\pi\alpha\Gamma^{'}\left(\tau_{c0}-\tau_{mf}\right)\tau_{c}^{'}(t)\right]\exp\left[i2\pi\frac{1}{2}\alpha\Gamma^{'}\tau_{c}^{'2}(t)\right]$$

représente un terme de phase supplémentaire qui n'a d'influence que sur l'histoire de phase Doppler pendant le temps d'éclairement et non sur le chemin de migration de sorte qu'il peut être ajouté à la réponse impulsionnelle traditionnelle du filtre de focalisation image. En se contentant des termes Doppler jusqu'à l'ordre 3, ce deuxième terme exponentiel à prendre en compte dans l'expression du filtre de focalisation image peut être mis sous la forme approchée :

$$\exp i2\pi\frac{\alpha\Gamma^{'}}{f_c}\left\{\left(\tau_{c0}-\tau_{mf}\right)f_{dc}t+\frac{1}{2}\left(f_{dr}\left(\tau_{c0}-\tau_{mf}\right)+\frac{f_{dc}^{2}}{f_c}\right)t^{2}\right.$$
$$\left.+\frac{1}{6}\left(f_{dq}\left(\tau_{c0}-\tau_{mf}\right)+3\frac{f_{dc}f_{dr}}{f_c}\right)t^{3}\right\}$$

avec un Doppler moyen $f_{dc}$, une pente Doppler $f_{dr}$ et une accélération Doppler $f_{dq}$. On remarque qu'une partie de ce terme dépend de la position de la cible par rapport au milieu de la fauchée utile. On peut tenir compte de cette non stationnarité en distance en même temps que de celle de la réponse impulsionnelle du filtre de focalisation image en adoptant, pour le traitement de construction de l'image, des blocs distance suffisamment étroits pour que les deux non stationnarités puissent être négligées.

Pour la correction de phase proprement dite, il faut être capable d'exprimer la position distance correspondant au terme $(\tau_{c0}$ - $\tau_{mf})$ dans les blocs distance découpés dans le tableau de données obtenu après compression d'impulsion, c'est-à-dire démodulation, transformées de Fourier en distance, passage dans la ligne dispersive, changement de variable fréquentielle distance par une variable temporelle distance et réarrangement des cases distance du tableau dans un ordre croissant. En s'intéressant au découpage par blocs du tableau de données qui se fait avec des recouvrements pour tenir compte de la migration distance, et en posant :

- $N_d$ le nombre d'échantillons en distance ou cases distance du tableau de données correspondant à l'étendu de la fauchée utile après compression d'impulsion (migrations incluses),
- $N_{dbn}$ le nombre de cases distance du tableau de données formant la marge négative d'un bloc distance,
- $N_{dbp}$ le nombre de cases distance du tableau de données formant la marge positive d'un bloc distance,
- $N_{db}$ le nombre total de blocs distance,
- $N_{dbu}$ le nombre de cases distance utiles pour les $N_{db}$-1 premiers blocs,

on peut écrire que le nombre total de blocs distance vaut :

$$N_{db}=ceil\left(\frac{N_d-N_{dbn}-N_{dbp}}{N_{dbu}}\right)$$

où ceil désigne une fonction qui rend l'entier supérieur ou égal à son argument. Le dernier bloc distance possède alors un nombre de cases distance utiles égal à :

$$N_{dbu}^{'}=N_d-N_{dbn}-N_{dbp}-\left(N_{db}-1\right)N_{dbu}$$

Dans ces conditions, la position temporelle du milieu de la fauchée utile après compression d'impulsion est donnée par :

$$\tau_{mf} = 0{,}5 \times \left(N_d - 1\right)T_e$$

et celle du centre de la portion utile de chaque bloc distance par :

$$\begin{cases} \tau_{c0}(k) = \left[N_{dbm} + kN_{dbu} + 0{,}5\left(N_{dbu} - 1\right)\right]T_e & 0 \leq k \leq N_{dbu} - 1 \\ \tau_{c0}\left(N_{db} - 1\right) = \left[N_{dbn} + \left(N_{db} - 1\right)N_{dbu} + 0{,}5\left(N'_{dbu} - 1\right)\right]T_e \end{cases}$$

On note que la position temporelle absolue de la première case distance de la fauchée n'a pas été introduite puisque l'on n'est seulement intéressé que par la position relative d'une cible par rapport au centre de la fauchée utile après compression d'impulsion.

La figure 8 illustre les principales étapes du traitement subi par le signal de réception d'un radar Deramp utilisé en radar à synthèse d'ouverture pour de l'imagerie radar.

Le signal de réception du radar Deramp $v_0(\tau, t)$ est tout d'abord démodulé dans un démodulateur 60 par une rampe de démodulation $v_d(\tau, t)$ de durée $T_d$ reprenant tout ou partie de l'impulsion modulée linéairement en fréquence émise, puis transformé en numérique et échantillonné, par un convertisseur analogique-numérique 61 en un tableau de données à deux dimensions distance et azimut.

Les données de ce tableau prises dans leur ordre de succession selon la dimension distance sont ensuite soumises à un filtrage par une ligne dispersive 62. Ce filtrage est réalisé en numérique en passant dans l'espace fréquentiel en distance au moyen d'une transformée de Fourier monodimensionnelle en distance 620. Dans cet espace fréquentiel, il s'obtient, comme cela est bien connu, par une simple multiplication complexe rappelée sur la figure par le multiplicateur 621, des données avec le conjugué $H_l^*$ de la fonction de transfert du filtre qui correspond par transformée de Fourier à la réponse impulsionnelle. Dans le cas présent, le filtre est une ligne dispersive particulière ayant pour réponse impulsionnelle :

$$h_l(t) = e^{i2\pi\frac{1}{2}Kt_2}$$

avec un coefficient K vérifiant la relation (2) :

$$K = \alpha \, \frac{T_d + T - 2T_a}{T_d - T_a}$$

$\alpha$ étant la pente de modulation des impulsions modulées linéairement en fréquence émises par le radar, T leur durée, $T_d$ la durée d'une rampe de démodulation et $T_a$ la durée utile de démodulation ou durée d'analyse. Après multiplication, les données sont replacées dans un espace temporel en distance par une transformation inverse de Fourier monodimensionnelle en distance.

Après leur filtrage par la ligne dispersive 62, les données du tableau sont soumises à une opération de troncature 63 consistant à remplacer par des valeurs nulles les données appartenant à des cases distance situées en dehors de la durée d'analyse $T_a$ car ces données constituent un bruit parasite pour les opérations ultérieures.

Après l'opération de troncature 63, le tableau de données est soumis à une fenêtre de pondération 64 destinée à réduire les lobes secondaires induits par le filtrage ultérieur de focalisation d'image dont la réponse impulsionnelle est en sinus cardinal.

Après la pondération par fenêtrage 64, le tableau de données à deux dimensions temporelles distance et azimut est soumis à une transformée de Fourier monodimensionnelle en distance 65 ayant pour but de poursuivre la compression d'impulsion entamée avec la démodulation 60. Il en résulte un tableau de données formé des échantillons en distance et azimut d'un signal $v_4(F, t)$ qui a été étudié précédemment.

La variable fréquentielle en distance F résultant de la transformée de Fourier en distance 65 est ensuite changée en une variable temporelle en distance τ au cours d'une étape de changement de variable 66. Puis les cases distance du tableau sont réarrangées au cours d'une étape de réarrangement 67 pour qu'elles se succèdent dans le tableau, selon un ordre de distance croissante. Ces étapes qui terminent la compression d'impulsion proprement dite aboutissent à un tableau de données formé des échantillons en distance d'un signal $v_5(\tau, t)$ qui a été étudié précédemment et qui est soumis à un traitement de construction d'image SAR légèrement modifié.

Ce traitement SAR commence, comme cela est habituel par un découpage 68 du tableau des données en blocs distance avec recouvrement pour tenir compte du phénomène de migration distance, chaque bloc ayant une étendue en distance suffisamment faible pour que la réponse impulsionnelle du filtre de focalisation et la loi de variation de phase parasite introduite par la compression d'impulsion puissent être considérées comme stationnaires en distance. Chaque bloc distance est ensuite soumis à une transformée de Fourier monodimensionnelle en distance 69 suivie d'une transformée de Fourier monodimensionnelle en azimut 70 puis ses données placées dans les domaines fréquentiels en distance et azimut sont multipliées en 71, par le conjugué $H^*_{SAR/das}(t)$ de la fonction de transfert d'un filtre de focalisation image modifiée pour tenir compte d'un terme de phase variable introduit par la compression d'impulsion. Cette fonction de transfert modifiée est la transformée de Fourier bidimensionnelle en distance et azimut d'une réponse impulsionnelle $h_{SAR/das}(t)$ s'exprimant en fonction de la réponse impulsionnelle $h_{SAR}(t)$ d'un filtre de focalisation d'image classique par une relation de la forme :

$$
h'_{SAR/das} = h_{SAR} \exp i 2\pi \frac{\alpha}{f_c} \left\{ \left( \tau_{c0} - \tau_{mf} \right) f_{dc} t + \frac{1}{2} \left( f_{dr} \left( \tau_{c0} - \tau_{mf} \right) + \frac{f_{dc}^2}{f_c} \right) t^2 \right.
$$
$$
\left. + \frac{1}{6} \left( f_{dq} \left( \tau_{c0} - \tau_{mf} \right) + 3 \frac{f_{dc} f_{dr}}{f_c} \right) t^3 \right\}
$$

provenant de l'expression de la réponse impulsionnelle modifiée $h_{SAR/das}$ figurant à la relation (6) à laquelle on a retiré la partie constante du terme de phase dû à la démodulation.

Chaque bloc distance a ensuite ses échantillons replacés dans les domaines temporels en distance et en azimut par une transformation inverse de Fourier monodimensionnelle en azimut 72 suivie d'une transformation inverse de Fourier monodimentionnelle en distance 73.

Les blocs distance sont alors privés de leurs marges de recouvrement et juxtaposés en 74 pour reconstituer un tableau de coefficients complexes de réflexion $\gamma(\tau, t)$ des points de la zone à imager, les modules de ces coefficients de réflexion déterminant le contraste de chaque point de l'image.

Sur la figure 8, on a représenté une étape supplémentaire 74, qui consiste à compenser la partie constante du terme de phase dû à la compression d'impulsion afin d'appliquer certains traitements à l'image comme des traitements d'interférométrie.

Le traitement que l'on vient de proposer, permet l'utilisation de la plus grande partie du signal d'un radar de type Deramp pour la construction d'une image tout en assurant la prise en compte du terme de phase parasite découlant des conditions particulières dans lesquelles s'effectue la compression d'impulsion. En dehors du filtrage par une ligne dispersive, il n'augmente pas, de manière conséquente, la quantité des calculs nécessaires à la construction d'une image radar.

## Revendications

1. Procédé de traitement du signal de réception d'un radar SAR de type Deramp pour obtenir une image radar, ledit radar SAR étant embarqué à bord d'un porteur en déplacement au dessus d'une zone de terrain à imager qu'il illumine, émettant des impulsions modulées linéairement en fréquence de durée T et de pente de modulation α, répétées de manière cohérente, démodulant le signal d'écho reçu en retour entre chaque impulsion émise par une rampe de démodulation qui est centrée en distance sur le milieu de la zone utile illuminée ou fauchée utile, qui reprend la forme de tout ou partie de l'impulsion émise et qui a une durée $T_d$ inférieure ou égale à la durée T d'une impulsion émise, suffisante pour recouvrir l'intervalle de temps de réception où se chevauchent les signaux d'écho de l'ensemble des cibles de la fauchée utile, et délivrant après démodulation, un signal vidéo brute de réception disponible sous la forme d'échantillons successifs ou données de réception qui sont pris à une double cadence : une cadence rapide correspondant à la succession des portes distance et définissant une dimension temporelle distance τ selon un axe distance orienté latéralement par rapport à la trajectoire du porteur du radar SAR, et une cadence lente correspondant à la succession des récurrences et définissant une dimension temporelle azimut t selon un axe azimut orienté dans la direction de déplacement du porteur du radar SAR, et qui se présentent sous la forme d'un tableau de données de réception à deux dimensions distance et azimut, ledit procédé étant caractérisé en ce qu'il comporte les étapes successives de traitement suivantes :

- passage des données du tableau de données de réception dans une ligne dispersive à réponse impulsionnelle $h_l(t)$ telle que sa fréquence instantanée est une fonction linéaire du temps :

$$h_l(t) = \exp\left(i2\pi\frac{1}{2}Kt^2\right)$$

avec une pente de modulation linéaire de fréquence K choisie égale à :

$$K = \alpha\,\frac{T_d + T - 2T_a}{T_d - T_a}$$

$T_a$ étant la durée utile de démodulation ou durée d'un support temporel commun choisi pour la démodulation des signaux d'écho en provenance de toutes les cibles de la fauchée utile, cette durée utile $T_a$ étant inférieure ou égale à la durée $T_d$ de la rampe de démodulation et supérieure ou égale à la période de temps commençant avant le début de réception d'un écho renvoyé par une cible placée en distance à l'extrémité éloignée de la fauchée utile et se terminant après la fin de réception d'un écho renvoyé par une cible placée en distance à l'extrémité proche de la fauchée utile tout en étant centrée en distance sur le milieu de la fauchée utile,
- sélection parmi les données du tableau bidimensionnel de données de réception consistant à retirer les données de réception se présentant selon l'axe distance en dehors de la durée utile choisie $T_a$ et à les remplacer par des valeurs nulles,
- remplacement des données du tableau de données de réception considérées selon la dimension distance, par leur transformée de Fourier monodimensionnelle en distance pour obtenir, après la démodulation et passage par la ligne dispersive, un genre de compression d'impulsion affectée d'un terme de phase parasite de compression d'impulsion,
- réarrangement des données du tableau selon la dimension distance afin de disposer de données correspondant à un ordre d'éloignement croissant en distance,
- découpage du tableau en bandes chevauchantes parallèlement à l'axe azimut de manière à avoir des bandes correspondant à des plages de distance étroites $\tau_i$ où peut être déterminé localement, en fonction des paramètres géométriques de la prise de vue, un filtre bidimensionnel de focalisation de l'image, ayant une réponse impulsionnelle $h_1(\tau,t,\tau_i)$ à deux variables temporelles $\tau$ distance et t azimut, et une fonction de correction de la phase parasite due à la compression d'impulsion, stationnaires dans la bande de distance $\tau_i$,
- filtrage des bandes de tableau par le filtre bidimensionnel de focalisation d'image dont la réponse impulsionnelle a été modifiée par la fonction de correction de la phase parasite,
- juxtaposition des bandes de tableau résultant du filtrage pour obtenir un tableau des coefficients complexes de réflexion des points de la zone de terrain illuminée, et
- construction d'une image de la zone illuminée à partir des modules des coefficients complexes de réflexion figurant dans le tableau obtenu à l'étape précédente.

**2.** Procédé selon la revendication 1, caractérisé en ce que la durée $T_d$ de la rampe de démodulation est égale à la durée T d'une impulsion modulée linéairement en fréquence émise.

**3.** Procédé selon la revendication 2, caractérisé en ce que la durée utile $T_a$ de démodulation est prise égale à la durée T d'une impulsion modulée linéairement en fréquence émise, diminuée de la moitié de la durée $T_f$ de fauchée utile.

**4.** Procédé selon la revendication 1, caractérisé en ce que le filtrage des bandes de tableau par le filtre bidimensionnel de focalisation d'image dont la réponse impulsionnelle a été modifiée par la fonction de correction de la phase parasite, est réalisé sur chaque bande du tableau des données en passant dans les espaces des fréquences distance et azimut, par deux transformations monodimensionnelles de Fourier directes effectuées successivement selon la dimension distance puis selon la dimension azimut.

**5.** Procédé selon la revendication 1, caractérisé en ce qu'il consiste, en outre à appliquer aux phases des coefficients complexes de rélexion de la zone de terrain illuminée obtenus après juxtaposition des bandes de tableau résultant du filtrage, une deuxième fonction de correction complétant l'effet de la première appliquée sur la réponse impulsionnelle du filtre de focalisation image.

**6.** Procédé selon la revendication 1, caractérisé en ce que ladite fonction de correction de phase parasite utilisée pour modifier la réponse impulsionnelle du filtre de focalisation image a pour expression :

$$\exp\left[-i2\pi\alpha\Gamma'\left(\tau_{c0} - \tau_{mf}\right)\tau_c'(t)\right]\exp\left[i2\pi\frac{1}{2}\alpha\Gamma'\tau_c'^{2}(t)\right]$$

avec :

$$\Gamma' = \frac{T - T_a}{T_d + T - 2T_a}$$

$\tau_{c0}$ étant la position temporelle en distance d'une cible au milieu de son temps d'éclairement par le radar en défilement azimutal sur sa trajectoire, c'est-à-dire la position temporelle en distance du centre de la portion utile de chaque bloc,
$\tau_{mf}$ étant la position temporelle en distance d'une cible située au milieu de la fauchée utile, et
$\tau'_c(t)$ étant une fonction de l'azimut définie par :

$$\tau'_c(t) = \tau_c(t) - \tau_{c0}$$

où $\tau_c(t)$ est le temps de propagation du signal d'écho d'une cible qui varie avec l'azimut.

**7.** Procédé selon la revendication 5, caractérisé en ce que ladite deuxième fonction de correction de phase utilisée pour modifier les phases des coefficients complexes de réflexion de la zone de terrain illuminée obtenus après juxtaposition des bandes de tableau résultant du filtrage a pour expression :

$$\exp\left[i2\pi\frac{1}{2}\alpha\Gamma'\left(\tau_{c0} - \tau_{mf}\right)^2\right]$$

avec :

$$\Gamma' = \frac{T - T_a}{T_d + T - 2T_a}$$

$\tau_{c0}$ étant la position temporelle en distance d'une cible au milieu de son temps d'éclairement par le radar en défilement azimutal sur sa trajectoire, c'est-à-dire la position temporelle en distance du centre de la portion utile de chaque bloc,
$\tau_{mf}$ étant la position temporelle en distance d'une cible située au milieu de la fauchée utile.

FIG.1

FIG.2

FIG.3

FIG.4

EP 0 884 605 A1

FIG.5

EP 0 884 605 A1

$sgn(\alpha)=1$

MILIEU
DE LA
FAUCHÉE

DÉBUT
DE LA
FAUCHÉE

FIN
DE LA
FAUCHÉE

MILIEU
DE LA
FAUCHÉE -1 ⟵ ÉTAT AVANT RÉ-
ARRANGEMENT
DES CASES
FRÉQUENCE

0

$\dfrac{N_f-1}{2}$

$N-\dfrac{N_f-1}{2}$

N-1

DÉBUT
DE LA
FAUCHÉE

MILIEU
DE LA
FAUCHÉE

FIN
DE LA
FAUCHÉE

⟵ ÉTAT APRÈS RÉ-
ARRANGEMENT
DES CASES
FRÉQUENCE

0

$\dfrac{N_f-1}{2}$

$N_f-1$

FIG.6

FIG.7

FIG.8

Office européen
des brevets

**RAPPORT DE RECHERCHE EUROPEENNE**

Numéro de la demande

EP 98 40 1135

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 5 627 543 A (MOREIRA) 6 mai 1997<br>* abrégé; figure 1 *<br>----- | 1 | G01S13/90 |
|  |  |  | **DOMAINES TECHNIQUES RECHERCHES** (Int.Cl.6) |
|  |  |  | G01S |

Le présent rapport a été établi pour toutes les revendications

| Lieu de la recherche | Date d'achèvement de la recherche | Examinateur |
|---|---|---|
| BERLIN | 14 juillet 1998 | Danielidis, S |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P04C02)